# EUROPÄISCHE PATENTSCHRIFT

(11) **EP 4 014 732 B1**
(45) Veröffentlichungstag und Bekanntmachung des Hinweises auf die Patenterteilung: **26.07.2023**
(21) Anmeldenummer: 21211124.9
(22) Anmeldetag: 29.11.2021
(51) Int. Cl.: A01M 7/00

(54) **LANDWIRTSCHAFTLICHE VERTEILMASCHINE UND VERFAHREN ZUR STEUERUNG UND/ODER REGELUNG EINER LANDWIRTSCHAFTLICHEN VERTEILMASCHINE**
AGRICULTURAL DISTRIBUTOR AND METHOD FOR CONTROL AND/OR REGULATION OF AN AGRICULTURAL DISTRIBUTOR
MACHINE AGRICOLE À ÉPANDRE ET PROCÉDÉ DE COMMANDE ET/OU DE RÉGULATION D'UNE MACHINE AGRICOLE À ÉPANDRE

(30) Priorität: 18.12.2020 DE 102020134151
(43) Veröffentlichungstag der Anmeldung: 22.06.2022
(73) Patentinhaber: HORSCH LEEB Application Systems GmbH, 94405 Landau an der Isar (DE)
(72) Erfinder: Leeb, Theodor, 94405 Landau an der Isar (DE)
(74) Vertreter: v. Bezold & Partner Patentanwälte - PartG mbB

(56) Entgegenhaltungen:
- EP-A1- 0 429 934
- DE-A1-102013 221 468
- DE-A1-102017 117 640
- US-A1- 2019 124 822
- US-A1- 2020 000 021

## Beschreibung

Die Erfindung betrifft eine landwirtschaftliche Verteilmaschine, vorzugsweise Feldspritze oder pneumatischer Düngerstreuer. Die Erfindung betrifft zudem ein Verfahren zur Steuerung und/oder Regelung einer landwirtschaftlichen Verteilmaschine.

Eine landwirtschaftliche Verteilmaschine wurde bspw. durch die DE 10 2013 221 468 A1 bereits aus dem Stand der Technik bekannt. Bekannt ist hierdurch eine Verteilmaschine mit einem Verteilgestänge, wobei das Verteilgestänge ein Mittelteil und zwei, mittels Gelenken mit dem Mittelteil verbundene seitlichen Ausleger aufweist, welche Ausleger sich aus mehreren, ebenfalls mittels Gelenken verbundenen Gestängesegmenten zusammensetzen, wobei die Ausleger und die Gestängesegmente jeweils mittels motorischer Stellelemente in eine ausgeklappte Arbeitsstellung und eine zusammengeklappte Transportstellung zueinander und gegenüber dem Mittelteil klappbar sind. Um eine möglichst schnelle und von äußeren Einflüssen unabhängige Klappung des Verteilgestänge zu erreichen ist vorgesehen, dass die Geschwindigkeiten der Stellelemente jeweils derartig gesteuert werden, dass jederzeit eine synchrone und winkelsymmetrische Klappung erfolgt.

Eine derartige synchrone und winkelsymmetrische Klappung hat sich jedoch in der Praxis mitunter als problematisch herausgestellt, da es bei Hanglagen und bei geringen Fahrspurbreiten des Trägerfahrzeug dazu kommen kann, dass eine ungünstige Schwerpunktlage eintreten und somit die Verteilmaschine umkippen kann.

Aufgabe der Erfindung ist es somit, eine Verteilmaschine zur Verfügung zu stellen, mittels der ein Ausklappen und ein Zusammenklappen eines Verteilgestänge in Abhängigkeit einer Neigung eines Trägerfahrzeug steuerbar ist, insbesondere derartig steuerbar ist, dass Hangaufwärts jederzeit ein ausreichendes Gewicht vorhanden ist und ein Umkippen verhindert werden kann.

Diese Aufgaben werden gelöst durch eine landwirtschaftliche Verteilmaschine mit den Merkmalen des unabhängigen Anspruch 1 sowie durch ein Verfahren mit den Merkmalen des Verfahrensanspruch 16. Vorteilhafte Ausführungsformen und Weiterbildungen der Erfindung sind in den Ansprüchen und der folgenden Beschreibung unter teilweiser Bezugnahme auf die Figuren offenbart.

Die Erfindung betrifft eine landwirtschaftliche Verteilmaschine, vorzugsweise Feldspritze oder pneumatischer Düngerstreuer.

Die Verteilmaschine umfasst zumindest ein Trägerfahrzeug, mit einer Neigungserfassungseinrichtung, die zur Erfassung einer Neigung des Trägerfahrzeug, vorzugsweise quer zur Fahrtrichtung, eingerichtet ist.

Die Verteilmaschine umfasst zudem zumindest ein Verteilgestänge zum Ausbringen von Material, wie Düngemittel, Pflanzenschutzmittel oder Saatgut, mit mehreren Gestängesegmenten, die mittels Gelenken miteinander verbunden sind und jeweils mittels motorischen Stelleinrichtungen in eine ausgeklappte Arbeitsstellung und eine zusammengeklappte Transportstellung zueinander klappbar sind, wobei wenigstens ein Gestängesegment ein Mittelteil bildet, welches zumindest um eine in Fahrtrichtung verlaufende Schwenkachse (z.B. gebildet durch Drehachse, Drehlager, Kugelkopf und/oder dergl.) bewegbar (z.B. drehbar, schwenkbar) am Trägerfahrzeug mittelbar oder unmittelbar angeordnet (z.B. gelagert) ist.

Darüber hinaus umfasst die Verteilmaschine zumindest eine Steuereinrichtung, zum Bereitstellen von Stellsignalen für die Stelleinrichtungen.

Die Verteilmaschine umfasst zudem zumindest eine Lageerfassungseinrichtung, die eingerichtet ist anhand von Lagen der Gestängesegmente (z.B. relativ zum Mittelteil und/oder zueinander), Positionssignale an eine Steuereinrichtung zu liefern.

Um eine Verteilmaschine zur Verfügung zu stellen, mittels derer ein Ausklappen und ein Zusammenklappen eines Verteilgestänge in Abhängigkeit einer Neigung eines Trägerfahrzeug steuerbar ist, insbesondere derartig steuerbar ist, dass Hangaufwärts jederzeit ein ausreichendes Gewicht vorhanden ist und ein Umkippen verhindert wird, ist erfindungsgemäß vorgesehen, dass die Steuereinrichtung eingerichtet ist, in Abhängigkeit der erfassten Neigung des Trägerfahrzeuges Stellsignale für die Stelleinrichtungen derartig bereitzustellen, dass eine Ausführung von Stellbewegungen der Stelleinrichtungen derartig erfolgt, dass ein zumindest annähernd synchrones und/oder definiert asynchrones Klappen von wenigstens zwei Gestängesegmenten relativ zum Mittelteil ausgeführt wird.

Infolge der erfindungsgemäßen Maßnahmen, wird demnach eine Verteilmaschine geschaffen, mittels derer ein Einklappen oder Ausklappen von Gestängesegmenten eines Verteilgestänge zueinander, respektive gegenüber dem Mittelteil in Abhängigkeit einer Hanglage zumindest annähernd synchron und/oder definiert asynchron erfolgt.

Die Erfindung macht sich die Erkenntnis zu Nutze, dass insofern keine Hanglage vorliegt, ein Klappen des Verteilgestänge zumindest annähernd synchron erfolgt, da keine ungünstige Schwerpunktlage, welche zum Umfallen der Verteilmaschine führen könnte eintreten kann und dass insofern eine Hanglage vorliegt, ein Klappen des Verteilgestänge definiert asynchron derartig erfolgt, dass eine durch eine Hanglage hervorgerufene Gewichtsverlagerung durch ein asynchrones Klappen der Gestängesegmente ausgeglichen werden kann und somit wiederum durch die Anpassung der Schwerpunktlage ein Umkippen, respektive Umfallen der Verteilmaschine verhindert wird.

Erfindungsgemäß ist es möglich, dass die Steuereinrichtung eingerichtet ist, Stellsignale nach der Regel, je größer die Neigung, desto größer die Differenzen des definiert asynchronen Klappen, bereitzustellen.

Es sei darauf hingewiesen, dass sich gemäß vorliegender Beschreibung ein synchrones oder definiert asynchrones jeweils auf Klappbewegungen von Gestängesegmenten die in Fahrtrichtung links und rechts gegenüber dem Mittelteil oder am Mittelteil angeordnet sind beziehen. Was jedoch auch umfassen kann, dass die Gestängesegmente nicht direkt mittels Gelenken am Mittelteil gelagert sein müssen, sondern dass noch weitere Gestängesegmente dazwischen angeordnet sein können. Wenn dementsprechend im vorliegenden Dokument von einem synchronen oder definiert asynchronen Klappen die Rede ist, so sind hiervon Klappbewegungen von wenigstens einem Gestängesegment das in Fahrtrichtung links und von wenigstens einem Gestängesegment das in Fahrtrichtung rechts gegenüber dem Mittelteil angeordnet ist, umfasst.

Eine bevorzugte Ausführungsvariante der Erfindung kann vorsehen, dass die Steuereinrichtung eingerichtet ist, in Abhängigkeit einer erfassten Neigung des Trägerfahrzeuges eine Zuordnung der Stelleinrichtung und/oder des Gestängesegment durchzuführen, insbesondere derartig durchzuführen, ob eine Stelleinrichtung und/oder ein Gestängesegment sich Hangaufwärts befindet oder sich Hangabwärts befindet, vorzugsweise sich gegenüber dem Mittelteil Hangaufwärts oder Hangabwärts befindet. Infolge der Zuordnung kann demnach ein gezielt asynchrones Klappen der Gestängesegmente durchgeführt werden um somit eine erforderliche Gewichtsverlagerung zu erreichen.

Eine Zuordnung kann bspw. derartig erfolgen, dass jeder Stelleinrichtung zumindest ein Ventil zugeordnet ist und in der Steuereinrichtung hinterlegt ist, wo die Stelleinrichtung am Verteilgestänge sich befindet, vorzugsweise sich gegenüber dem Mittelteil befindet. Basierend auf einer Neigung (z.B. linksgerichtet oder rechtsgerichtet) des Chassis kann anschließend mittels der Steuereinrichtung die Zuordnung durchgeführt werden.

Gemäß einer Ausführungsvariante der Erfindung kann vorgesehen sein, dass ein zumindest annähernd synchrones Klappen, vorzugsweise ein zumindest annähernd symmetrisches, insbesondere winkelsymmetrisches, Klappen von wenigstens zwei Gestängesegmenten relativ zum Mittelteil umfasst, wobei die Steuereinrichtung hierfür eingerichtet ist, Stellsignale für die Stelleinrichtungen derartig bereitzustellen, dass eine Ausführung von Stellbewegungen der Stelleinrichtungen derartig erfolgt, dass zumindest zwei Lageerfassungseinrichtungen durch zumindest weitgehend identische Lagen definierte Positionssignale liefern. Es sei hierzu angemerkt, dass sich die Positionssignale jeweils auf Relativpositionen beziehen, d.h. somit bspw. gleiche Winkelsignale liefern, welche jedoch, aufgrund der Anordnung negativ oder positiv sein können.

Demgegenüber ist es möglich, dass ein definiert asynchrones Klappen, vorzugsweise ein asymmetrisches Klappen von wenigstens zwei Gestängesegmenten relativ zum Mittelteil umfasst, wobei die Steuereinrichtung hierfür eingerichtet ist, Stellsignale für die Stelleinrichtungen derartig bereitzustellen, dass eine Ausführung von Stellbewegungen der Stelleinrichtungen derartig erfolgt, dass zumindest zwei Lageerfassungseinrichtungen durch unterschiedliche Lagen definierte Positionssignale liefern, vorzugsweise durch definierte unterschiedliche Lagen definierte Positionssignale liefern. Was bedeutet, dass bspw. die Lageerfassungseinrichtungen definierte unterschiedliche Winkel liefern, dass bedeutet, dass die Steuereinrichtung eingerichtet ist, Stellsignale für die Stelleinrichtung derartig bereitzustellen, dass bspw. vorgegebene, unterschiedlichen Winkeln entsprechende Positionssignale ausgegeben werden.

Eine Gewichtsverlagerung kann gemäß einer Weiterbildung der Erfindung zweckmäßig insbesondere dadurch erreicht werden, dass für das Ausführen eines definiert asynchronen Klappen, die Steuereinrichtung dazu eingerichtet ist, Stellsignale für zumindest eine Hangaufwärts angeordnete Stelleinrichtung derartig bereitzustellen, dass eine Ausführung von Stellbewegungen mittels der Stelleinrichtung derartig erfolgt, dass bei einem Ausklappen, zumindest ein sich Hangaufwärts befindendes Gestängesegment eine größere Klappgeschwindigkeit aufweist als zumindest ein sich Hangabwärts befindendes Gestängesegment und dass bei einem Einklappen, zumindest ein sich Hangaufwärts befindendes Gestängesegment eine geringere Klappgeschwindigkeit aufweist als zumindest ein sich Hangabwärts befindendes Gestängesegment.

Wobei die Klappgeschwindigkeit hierbei jeweils eine Zeitspanne umfassen kann, die zwischen dem Beginn des Ausklappvorgang und/oder des Zusammenklappvorgang und dem Beenden des Ausklappvorgang und/oder des Zusammenklappvorgang liegt, das heißt jeweils eine Zeitspanne, die zwischen dem Erreichen von Endlagen liegt umfasst. Wobei hierbei auch sich verändernde Klappgeschwindigkeiten Berücksichtigung finden können.

Gemäß einer Ausführungsvariante der Erfindung ist es möglich, dass für das Ausführen eines zumindest annähernd synchronen Klappen, die Steuereinrichtung eingerichtet ist, Stellsignale für die Stelleinrichtungen derartig bereitzustellen, dass eine Ausführung von Stellbewegungen der Stelleinrichtungen mit derartigen Verfahrgeschwindigkeiten erfolgt, dass die Gestängesegmente eine zumindest annähernd gleiche Klappgeschwindigkeit zueinander aufweisen.

Alternativ oder ergänzend ist es möglich, dass für das Ausführen eines zumindest annähernd synchronen Klappen, die Steuereinrichtung eingerichtet ist, Stellsignale für die Stelleinrichtungen derartig bereitzustellen, dass eine Ausführung von Stellbewegungen der Stelleinrichtungen mit derartigen Verfahrgeschwindigkeiten erfolgt, dass die Gestängesegmente eine zumindest annähernd gleiche Winkelposition zueinander aufweisen.

Alternativ oder ergänzend ist es möglich, dass für das Ausführen eines zumindest annähernd synchronen Klappen, die Steuereinrichtung eingerichtet ist, Stellsignale für die Stelleinrichtungen derartig bereitzustellen, dass eine Ausführung von Stellbewegungen der Stelleinrichtungen zumindest weitgehend gleichzeitig gestartet wird.

Gemäß einer Ausführungsvariante der Erfindung ist es möglich, dass für das Ausführen eines definiert asynchronen Klappen, die Steuereinrichtung eingerichtet ist, Stellsignale für die Stelleinrichtungen derartig bereitzustellen, dass eine Ausführung von Stellbewegungen der Stelleinrichtungen mit derartigen unterschiedlichen Verfahrgeschwindigkeiten erfolgt, dass die Gestängesegmente unterschiedliche Klappgeschwindigkeiten zueinander aufweisen.

Alternativ oder ergänzend ist es möglich, dass für das Ausführen eines definiert asynchronen Klappen, die Steuereinrichtung eingerichtet ist, Stellsignale für die Stelleinrichtungen derartig bereitzustellen, dass eine Ausführung von Stellbewegungen der Stelleinrichtungen mit derartigen unterschiedlichen Verfahrgeschwindigkeiten erfolgt, dass die Gestängesegmente unterschiedliche Winkelpositionen zueinander aufweisen.

Alternativ oder ergänzend ist es möglich, dass für das Ausführen eines definiert asynchronen Klappen, die Steuereinrichtung eingerichtet ist, Stellsignale für die Stelleinrichtungen derartig bereitzustellen, dass eine Ausführung von Stellbewegungen der Stelleinrichtungen mit einem definierten (z.B. frei definierbar) Zeitversatz gestartet wird. Wobei es auch denkbar ist, dass der Zeitversatz in Abhängigkeit der Neigung unterschiedlich ist, das heißt variieren kann und/oder dass jeweils Neigungen ein definierter Zeitversatz zugeordnet sind.

Alternativ oder ergänzend ist es möglich, dass für das Ausführen eines definiert asynchronen Klappen, die Steuereinrichtung eingerichtet ist, Stellsignale für die Stelleinrichtung derartig bereitzustellen, dass eine Ausführung von Stellbewegungen in Teilschritten erfolgt, so dass ein Hangaufwärts befindendes Gestängesegment erst zusammengeklappt wird, nachdem ein Hangabwärts befindendes Gestängesegment zusammengeklappt (z.B. eine Endlage erreicht hat) wurde. Wobei ein Ausklappen in einer umgekehrten Reihenfolge erfolgen kann.

Erfindungsgemäß ist es somit jeweils möglich, dass Verfahrgeschwindigkeiten der Stelleinrichtungen Anhand einer Neigung des Trägerfahrzeuges steuerbar und/oder regelbar sind. Wobei die Stelleinrichtungen bspw. als Fluidzylinder (z.B. Pneumatikzylinder oder Hydraulikzylinder) und die Verfahrgeschwindigkeit bspw. durch eine Volumenstromregelung gesteuert und/oder geregelt werden kann, was heißt dass die Verfahrgeschwindigkeit basierend auf einer Menge an Fluid welchem der Stelleinrichtung zugeführt und/oder von dieser abgeführt wird gesteuert und/oder geregelt werden kann. Wobei für ein synchrones Klappen auch sog. Mengenteiler eingesetzt werden können.

Gemäß einer bevorzugten Ausführungsvariante der Erfindung ist es möglich, dass ein definiert asynchrones Klappen derartig erfolgt, dass gegenüber dem Mittelteil eine Breite der Hangaufwärts sich befindenden Gestängesegmente stets größer ist als eine Breite der Hangabwärts sich befindenden Gestängesegmente.

Um ein Ausführen eines zumindest annähernd synchronen Klappen und/oder eines definiert asynchronen Klappen noch weiter zu verbessern, kann gemäß einer Weiterbildung der Erfindung vorgesehen sein, dass in der Steuereinrichtung durch Neigungen des Trägerfahrzeug definierte, vorzugsweise durch Bereiche von Neigungen des Trägerfahrzeug definierte, Sollvorgaben für Verfahrgeschwindigkeiten, Winkelpositionen und/oder einen definierten Zeitversatz für ein zumindest annähernd synchrones und/oder definiert asynchrones Klappen, hinterlegt sind, wobei die Steuereinrichtung eingerichtet ist, Stellsignale für die Stelleinrichtungen in Abhängigkeit der Sollvorgaben und von mittels der Lageerfassungseinrichtung gelieferten Positionssignalen bereitzustellen. Somit kann insbesondere unterschiedlichen Neigungen, das heißt Hangneigungen, Rechnung getragen werden.

Ein Hinterlegen von Sollvorgaben kann hierbei bspw. manuell durch eine Bedienperson erfolgen und/oder durch eine Signalübertragung von bspw. einer Datenbank erfolgen. Auch können Sollvorgaben durch den Hersteller der Verteilmaschine vorgegeben werden oder vorgegeben sein.

Gemäß einer bevorzugten Ausführungsvariante umfasst das Verteilgestänge wenigstens fünf Gestängesegmente oder wenigstens sieben Gestängesegmente, wobei die Steuereinrichtung eingerichtet ist, in Abhängigkeit der erfassten Neigung des Trägerfahrzeuges Stellsignale für die Stelleinrichtungen derartig bereitzustellen, dass eine Ausführung von Stellbewegungen der Stelleinrichtungen für ein definiert asynchrones Klappen derartig erfolgt, dass ein zumindest annähernd synchrones Klappen von wenigstens zwei Gestängesegmenten relativ zum Mittelteil ausgeführt wird und ein jeweils definiert asynchrones Klappen von wenigstens zwei Gestängesegmenten jeweils gegenüber einem weiteren Gestängesegment, ausgeführt wird und/oder dass ein definiert asynchrones Klappen von wenigstens zwei Gestängesegmenten relativ zum Mittelteil ausgeführt wird und ein zumindest annähernd synchrones Klappen von wenigstens zwei Gestängesegmenten jeweils gegenüber einem weiteren Gestängesegment ausgeführt wird. Somit kann zum einen eine definierte Gewichtsverlagerung erreicht und zum anderen dennoch ein schneller Ausklappvorgang und/oder Zusammenklappvorgang erreicht werden.

Alternativ oder ergänzend ist es möglich, dass die Steuereinrichtung eingerichtet ist, Stellsignale für die Stelleinrichtungen derartig bereitzustellen, dass eine Ausführung von Stellbewegungen der Stelleinrichtungen zum zumindest annähernd synchronen und/oder definiert asynchronen Klappen in Abhängigkeit von mittels der Lageerfassungseinrichtung gelieferten Positionssignalen ausgeführt wird.

Die Gestängesegmente können mittels Gelenken und jeweils mittels motorischen Stelleinrichtungen mit einem Schwenkwinkel von 180° oder von 90° in eine ausgeklappte Arbeitsstellung und eine zusammengeklappte Transportstellung zueinander klappbar sein, wobei die Gelenke, vorzugsweise durch in Arbeitsstellung im Wesentlichen aufrecht orientierte, Drehachsen gebildet sein können.

Gemäß einer besonders bevorzugten Ausführungsvariante der Erfindung ist es möglich, dass Grenzwerte für Neigungen des Trägerfahrzeug definiert und/oder definierbar sind und die Steuereinrichtung eingerichtet ist, in Abhängigkeit einer erfassten Neigung des Trägerfahrzeuges und in Abhängigkeit von Grenzwerten für Neigungen des Trägerfahrzeuges Stellsignale für die Stelleinrichtungen derartig bereitzustellen, dass eine Ausführung von Stellbewegungen der Stelleinrichtungen derartig erfolgt, dass bei einem unterschreiten des Grenzwertes ein zumindest annähernd synchrones Klappen von wenigstens zwei Gestängesegmenten relativ zum Mittelteil ausgeführt wird und dass bei einem erreichen oder überschreiten des Grenzwertes ein definiert asynchrones Klappen von wenigstens zwei Gestängesegmenten relativ zum Mittelteil ausgeführt wird.

Alternativ oder ergänzend ist es möglich, dass Grenzwerte für Neigungen des Trägerfahrzeug manuell eingebbar oder einlesbar sind und/oder definiert sind durch eine Maschinengeometrie des Trägerfahrzeuges, insbesondere eine Fahrspur eines dem Trägerfahrzeug zugeordneten Fahrwerk und/oder durch die Maschinengeometrie des Verteilgestänge, insbesondere durch eine Breite der Gestängesegmente. Darüber hinaus wäre auch eine Berücksichtigung eines Füllstand eines Vorratsbehälters denkbar.

Um beim Ausklappen und/oder Zusammenklappen einen möglichst tief liegenden Schwerpunkt der Verteilmaschine zu erreichen, kann vorgesehen sein, dass das Mittelteil mittels einer, mittels der Steuereinrichtung steuer- und/oder regelbaren Höhenverstelleinrichtung höhenverstellbar am Trägerfahrzeug gelagert ist, wobei die Steuereinrichtung eingerichtet ist, Steuer- und/oder Regelsignale für die Höhenverstelleinrichtung in Abhängigkeit von mittels der Lageerfassungseinrichtung gelieferten Positionssignalen bereitzustellen. Somit kann erreicht werden, dass eine Höhenlage des Verteilgestänge so lange so tief wie möglich gehalten wird und somit die Gewichtsverlagerung noch weiter verbessert wird.

Um ein möglichst schnelles und dennoch ruhiges, das heißt sanftes Klappen zu ermöglichen, kann vorgesehen sein, dass die Steuereinrichtung eingerichtet ist, Stellsignale für die Stelleinrichtungen in Abhängigkeit von mittels der Lageerfassungseinrichtung gelieferten Positionssignalen derartig bereitzustellen, dass eine Ausführung von Stellbewegungen der Stelleinrichtungen mit derartigen sich verändernden Verfahrgeschwindigkeiten erfolgt, das eine Verfahrgeschwindigkeit vor Erreichen einer Endlage der Gestängesegmente in ausgeklappter Arbeitsposition oder in zusammengeklappter Transportposition reduziert wird. Hierbei ist es möglich, dass die Steuereinrichtung eingerichtet ist die Stelleinrichtung mit einer Ansteuerrampe anzusteuern, auch denkbar wäre eine Lageabhängige Volumenstromregelung.

Um Kollisionen während des Klappen zu vermeiden ist es möglich, dass eine Drehlage des Mittelteil um die in Fahrtrichtung verlaufende Schwenkachse mittels eines oder mehreren Stellantrieben mittelbar oder unmittelbar veränderbar oder sperrbar (z.B. arretierbar) ist, wobei die Steuereinrichtung eingerichtet ist, Stellsignale für die Stelleinrichtungen unter Berücksichtigung einer definierten und/oder definierbaren Drehlage bereitzustellen, vorzugsweise derartig, dass eine Ausführung von Stellbewegungen ausschließlich erfolgt, bei einem zumindest weitgehend parallel zu einer Bezugsfläche orientierten Drehlage des Verteilgestänge und/oder bei einer senkrecht zum Trägerfahrzeug orientierten Drehlage des Verteilgestänge.

Es ist möglich, dass die Steuereinrichtung eine Anzeigevorrichtung (z.B. Terminal, mobiles Endgerät und/oder dergl.) umfasst und/oder mit einer derartigen signalverbunden und/oder signalverbindbar ist, welche eingerichtet ist, in Abhängigkeit einer Neigung des Trägerfahrzeug einen Warnhinweis (z.B. optisch, akustisch, haptisch) auszugeben.

Die landwirtschaftliche Verteilmaschine, vorzugsweise die Feldspritze oder der pneumatische Düngerstreuer, kann als eine selbstfahrende oder als eine mittels eines Zugfahrzeug (z.B. Traktor) gezogene oder als eine an einem Zugfahrzeug angebaute (z.B. mittels 3-Punkt-Anhängung) Verteilmaschine mit zweckmäßig einem Verteilgestänge ausgeführt sein. Die Verteilmaschine kann zudem eine autonome (z.B. teilautonom oder vollautonom) landwirtschaftliche Verteilmaschine sein.

Die Verteilmaschine umfasst zweckmäßig ein Trägerfahrzeug mit bspw. einem Chassis (z.B. gebildet durch eine Rahmenkonstruktion) und einem Fahrwerk.

Zum Verteilen des Materials sind dem Verteilgestänge, respektive den Gestängesegmenten bspw. Spritzdüsen, Prallelemente und/oder dergl. zugeordnet.

Die Neigungserfassungseinrichtung und/oder die Steuereinrichtung können eingerichtet sein, aus einer erfassten Neigung des Trägerfahrzeug eine Hanglage zu ermitteln, insbesondere zweckmäßig derartig, ob das Trägerfahrzeug gegenüber der Fahrrichtung rechts oder links geneigt ist.

Die Neigungserfassungseinrichtung umfasst zweckmäßig einen oder mehrere dem Trägerfahrzeug der Verteilmaschine, vorzugsweise dem Chassis, zugeordnete eine Neigung erfassende Sensoren.

Als Neigungserfassungseinrichtung können bspw. ein oder mehrere Neigungssensoren eingesetzt werden, welche bspw. den Winkel (Neigung) eines Objekt (Trägerfahrzeug) zur Schwerkraft messen. Alternativ oder ergänzend können auch ein oder mehrere Beschleunigungskompensierte Neigungssensoren eingesetzt werden. Auch Drehratensensoren (z.B. in Form eins Gyroskops), und/oder Beschleunigungsaufnehmer (z.B. in Form von Beschleunigungssensoren) und/oder dergl. können eingesetzt werden.

Gemäß einer alternativen oder ergänzenden Ausführungsvariante ist es denkbar, dass die Räder des Fahrwerks, das heißt eine Höhenlage (z.B. Neigung des Trägerfahrzeug quer zur Fahrtrichtung) des Trägerfahrzeug, höhenverstellbar und/oder federnd ist, bspw. mittels Aktoren (z.B. ein oder mehrere hydraulisch und/oder pneumatisch betriebene(r) einfach oder doppeltwirkende(r) Zylinder) höhenverstellbar und/oder federnd ist. Wobei es gemäß einer derartigen Ausführungsvariante denkbar ist, dass die Neigungserfassungseinrichtung durch einen oder mehrere, mit den Aktoren gekoppelte Sensoren gebildet ist. Die Sensoren können bspw. durch Drucksensoren (z.B. zur Erfassung eines Zylinderdrucks) und/oder Lagesensoren (z.B. mit dem Zylinder gekoppeltes Wegmesssystem) gebildet sein, wobei die Steuereinrichtung eingerichtet sein kann, anhand eines Druckes und/oder einer Lage auf eine Neigung rückzuschließen. Somit wäre es bspw. auch denkbar, ein definiert asynchrones Klappen derartig auszuführen, dass ein definiertes und/oder definierbares Druckniveau in den Aktoren und/oder eine definierte und/oder definierbare Lage der Aktoren erreicht wird und/oder eingehalten wird.

Die Lageerfassungseinrichtung kann durch zweckmäßig mit jeweils zwei Gestängesegmenten gekoppelte Winkelsensoren und/oder Drehpotentiometer und/oder durch der Stelleinrichtung zugeordnete Wegmesssysteme und/oder dergl. gebildet sein.

Die Drehlage des Mittelteil kann um eine in Fahrtrichtung verlaufende Schwenkachse mittels eines oder mehreren Stellantrieben (z.B. ein oder mehrere hydraulisch und/oder pneumatisch betriebene(r) einfach oder doppeltwirkende(r) Zylinder) mittelbar oder unmittelbar veränderbar oder sperrbar sein. Gemäß dieser Ausführungsvariante ist zudem es möglich, dass die Lageerfassungseinrichtung durch einen oder mehrere, mit den Stellantrieben gekoppelte Sensoren gebildet ist. Die Sensoren können bspw. durch Drucksensoren (z.B. zur Erfassung eines Zylinderdrucks) und/oder Lagesensoren (z.B. mit dem Zylinder gekoppeltes Wegmesssystem) gebildet sein, und eingerichtet sein, anhand eines Druckes und/oder einer Lage Positionssignale an die Steuereinrichtung zu liefern. Somit wäre es bspw. auch denkbar, ein definiert asynchrones Klappen derartig auszuführen, dass ein definiertes und/oder definierbares Druckniveau in wenigstens einem Stellantrieb und/oder eine definierte und/oder definierbar Lage wenigstens eines Stellantriebes erreicht wird und/der eingehalten wird.

Die Steuereinrichtung weist bspw. eine Rechnereinheit, einen Bordcomputer und/oder dergl. mit einem Steuerungs- und/oder Regelungsprogramm auf, welches zweckmäßig zur Bereitstellung von Stellsignalen ausgebildet ist. Die Steuereinrichtung umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst der Begriff der Steuereinrichtung, insbesondere die Gesamtheit der Bauteile zur Signal- und/oder Befehlsübertragung. Ebenso umfasst sind entsprechend auch in den jeweiligen Sensoren oder Sensoreinheiten oder Sensoranordnungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer- und/oder Regelgröße herangezogen werden können.

Es sei noch darauf hingewiesen, dass die Begriffe "Steuern" und "Regeln" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Zur Vermeidung von Wiederholungen sollen im Zusammenhang mit der Verteilmaschine offenbarte Merkmale auch Verfahrensgemäß offenbart gelten und beanspruchbar sein. Die vorgenannten Aspekte und erfindungsgemäßen Merkmale und Ausführungsvarianten, insbesondere im Hinblick auf die Verteilmaschine gelten somit auch für das Verfahren und sind in beliebiger Weise und Frei miteinander kombinierbar. In umgekehrter Weise gilt das gleiche, so dass auch alle Aspekte, erfindungsgemäße Merkmale und Ausführungsvarianten die im Zusammenhang mit dem Verfahren offenbart sind, demnach auch für die Verteilmaschine offenbart und entsprechend beanspruchbar sind.

Die Erfindung umfasst zur Lösung der Aufgaben zudem ein Verfahren zur Steuerung und/oder Regelung einer landwirtschaftlichen Verteilmaschine, vorzugsweise Feldspritze oder pneumatischer Düngerstreuer. Mit zumindest einem Trägerfahrzeug, mit einer Neigungserfassungseinrichtung, die zur Erfassung einer Neigung des Trägerfahrzeug, vorzugsweise quer zur Fahrtrichtung, eingerichtet ist. Sowie mit zumindest einem Verteilgestänge zum Ausbringen von Material, wie Düngemittel, Pflanzenschutzmittel oder Saatgut, mit mehreren Gestängesegmenten, die mittels Gelenken miteinander verbunden sind und jeweils mittels motorischen Stelleinrichtungen in eine ausgeklappte Arbeitsstellung und eine zusammengeklappte Transportstellung zueinander klappbar sind, wobei wenigstens ein Gestängesegment ein Mittelteil bildet welches zumindest um eine in Fahrtrichtung verlaufende Schwenkachse bewegbar am Trägerfahrzeug mittelbar oder unmittelbar angeordnet ist,

Zudem umfassend zumindest eine Steuereinrichtung, zum Bereitstellen von Stellsignalen für die Stelleinrichtungen.

Darüber hinaus zumindest umfassend eine Lageerfassungseinrichtung, die eingerichtet ist, anhand von Lagen der Gestängesegmente, Positionssignale an eine Steuereinrichtung zu liefern.

Das Verfahren zeichnet sich aus, durch ein Bereitstellen von Stellsignalen für die Stelleinrichtungen in Abhängigkeit einer erfassten Neigung des Trägerfahrzeuges derartig, dass eine Ausführung von Stellbewegungen mittels der Stelleinrichtungen derartig erfolgt, dass ein zumindest annähernd synchrones und/oder definiert asynchrones Klappen von wenigstens zwei Gestängesegmenten relativ zum Mittelteil ausgeführt wird.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1A: eine Perspektivansicht einer Ausführungsvariante einer Verteilmaschine, in Form einer Feldspritze, mit einem zusammengeklappten, eine Transportstellung aufweisenden Verteilgestänge,
- Figur 1B: eine Perspektivansicht der Verteilmaschine gemäß der Figur 1A mit einem ausgeklappten, eine Arbeitsstellung aufweisenden Verteilgestänge,
- Figur 1C: eine Detailansicht einer mittelbaren Anordnung des Verteilgestänge, insbesondere des Mittelteils, an einem Trägerfahrzeug einer Verteilmaschine gemäß der Figur 1B,
- Figur 1D: eine Rückansicht der Verteilmaschine gemäß der Figur 1B.
- Figur 1E: eine Draufsicht der Verteilmaschine gemäß der Figur 1B,
- Figur 2A: eine Rückansicht einer Ausführungsvariante einer Verteilmaschine, in Form einer Feldspritze, wessen Trägerfahrzeug nach links geneigt ist, mit einem Verteilgestänge welches fünf Gestängesegmente umfasst und welches, aufgrund der Neigung, sich in einer definiert asynchronen Klappstellung befindet,
- Figur 2B: eine Draufsicht der Verteilmaschine gemäß der Figur 2A,
- Figur 3A: ein Rückansicht einer Ausführungsvariante einer Verteilmaschine, in Form einer Feldspritze, wessen Trägerfahrzeug nicht geneigt ist, mit einem Verteilgestänge welches sieben Gestängesegmente umfasst und welches aufgrund einer geraden Ausrichtung des Trägerfahrzeug sich in einer zumindest annähernd synchronen Klappstellung befindet,
- Figur 3B: eine Draufsicht der Verteilmaschine gemäß der Figur 3A.

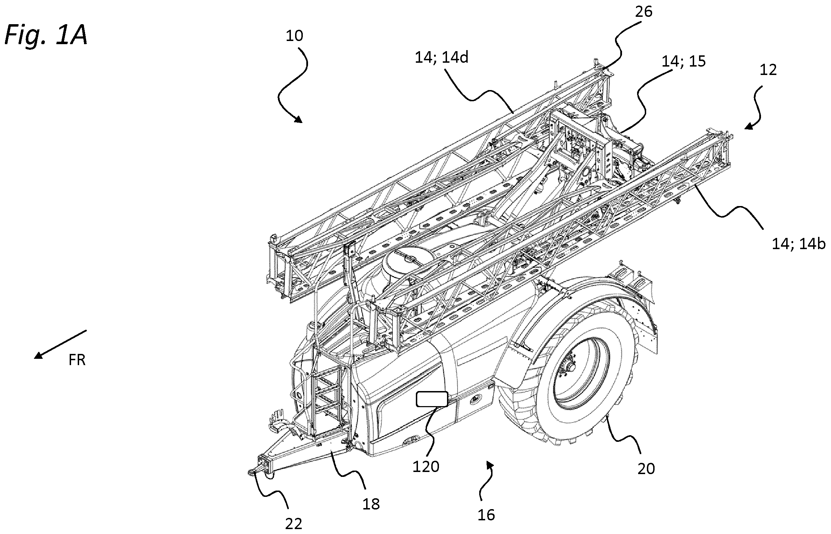

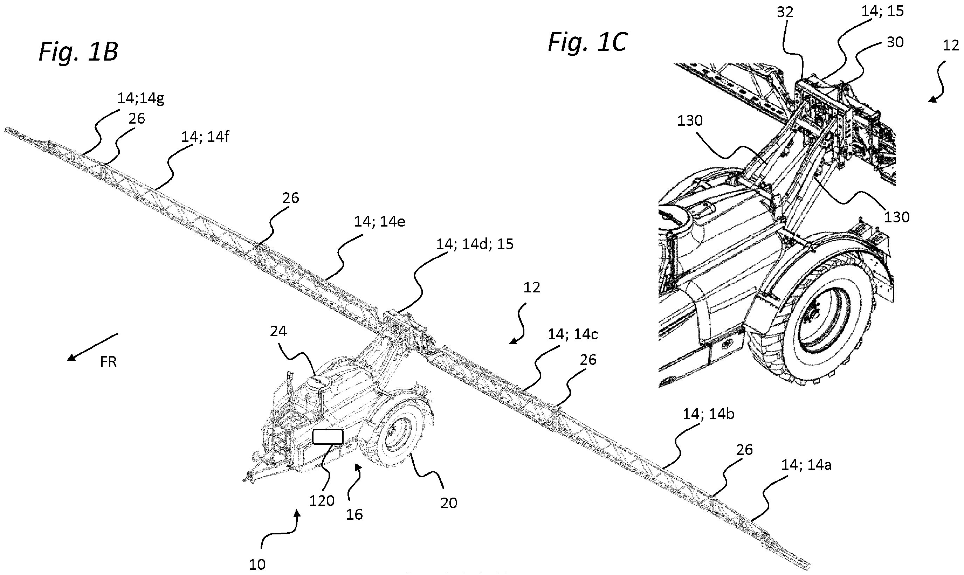

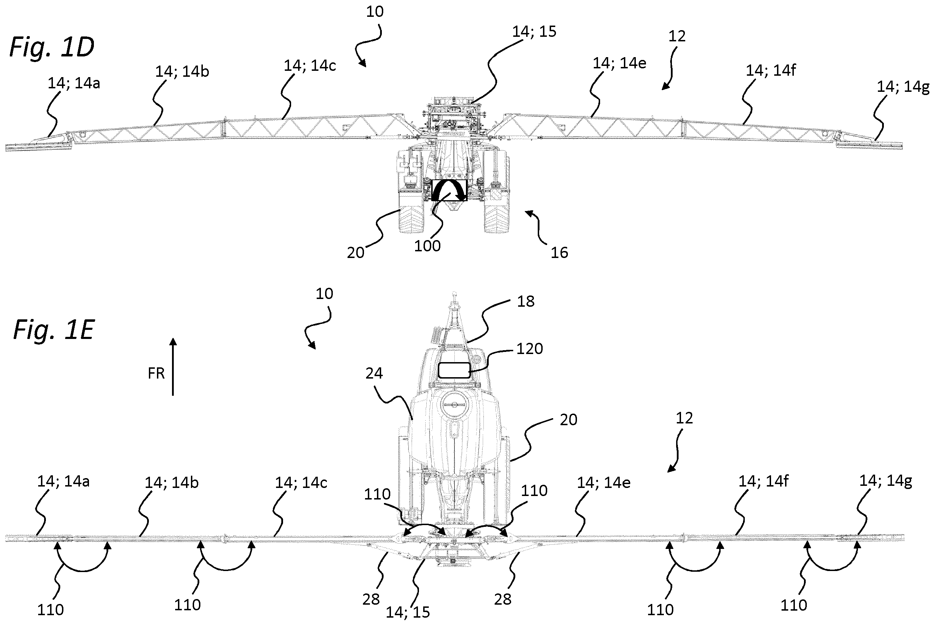

Die in den Figuren 1 bis 3 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße Verteilmaschine, und das erfindungsgemäße Verfahren ausgestaltet und ausgeführt sein können und stellen keine abschließende Begrenzung dar.

Es sei vorab darauf hingewiesen, dass sich gemäß vorliegender Figurenbeschreibung ein synchrones oder definiert asynchrones jeweils auf Klappbewegungen von Gestängesegmenten 14; 14a-14g die in Fahrtrichtung FR links und rechts gegenüber dem Mittelteil 15 oder am Mittelteil 15 angeordnet sind beziehen. Was jedoch, wie aus den Figuren hervorgeht, auch umfassen kann, dass die Gestängesegmente 14; 14a-14g nicht direkt mittels Gelenken 26 am Mittelteil 15 gelagert sein müssen, sondern dass noch weitere Gestängesegmente 14; 14a-14g dazwischen angeordnet sein können. Wenn dementsprechend im vorliegenden Dokument von einem synchronen oder definiert asynchronen Klappen die Rede ist, so sind hiervon Klappbewegungen von wenigstens einem Gestängesegment 14; 14a-14g das in Fahrtrichtung FR links und von wenigstens einem Gestängesegment 14; 14a-14g das in Fahrtrichtung FR rechts gegenüber dem Mittelteil 15 angeordnet ist, umfasst.

Eine Ausführungsvariante einer landwirtschaftlichen Verteilmaschine 10, bspw. in Form einer Feldspritze zeigen die Figuren 1A bis 1E. Wobei Figur 1A hierbei eine Perspektivansicht einer Verteilmaschine 10 mit einem zusammengeklappten eine Transportstellung aufweisenden Verteilgestänge 12 zeigt und die Figur 1B eine Perspektivansicht einer Verteilmaschine 10 mit einem eine Arbeitsstellung aufweisenden Verteilgestänge 12 zeigt. Darüber hinaus zeigt die Figur 1D eine Rückansicht und Figur 1E eine Draufsicht der Verteilmaschine 10 gemäß der Figur 1B.

Es sei darauf hingewiesen, dass auch wenn die vorliegende Figurenbeschreibung eine Verteilmaschine 10 in Form einer Feldspritze zeigt, die Verteilmaschine 10 vorzugsweise auch ein pneumatischer Düngerstreuer mit einem entsprechenden Verteilgestänge 12 sein könnte.

Die Verteilmaschine 10, respektive die Feldspritze, ist jeweils als eine mittels eines Zugfahrzeug (hier nicht dargestellt) gezogene Verteilmaschine 10 ausgeführt. Die vorliegende Erfindung könnte jedoch auch bei selbstfahrenden oder bei an einem Zugfahrzeug angebauten Verteilmaschinen Anwendung finden.

Die Verteilmaschine 10 umfasst ein Trägerfahrzeug 16, welches sich zweckmäßig aus einem Chassis 18 (z.B. eine Rahmenkonstruktion) und einem Fahrwerk 20 zusammensetzt. Das Trägerfahrzeug 16 umfasst zudem eine Verbindungseinrichtung 22 zum Verbinden der Verteilmaschine 10 mit einem hier nicht dargestellten Zugfahrzeug, sowie zum Mitführen und Bereitstellen von wenigstens einem auszubringenden Material zumindest einen Vorratsbehälter 24.

Dem Trägerfahrzeug 16 (z.B. dem Chassis 18) ist eine Neigungserfassungseinrichtung 100, die zur Erfassung einer Neigung des Trägerfahrzeug 16, vorzugsweise quer zur Fahrtrichtung FR, eingerichtet ist, zugeordnet.

Zum Ausbringen von Material, wie bspw. Düngemittel, Pflanzenschutzmittel oder Saatgut umfasst die Verteilmaschine 10 ein Verteilgestänge 12, mit mehreren Gestängesegmenten 14, gemäß der Figuren 1 mit fünf Gestängesegmenten 14a-14e. Wobei den Gestängesegmenten 14, 14a-14e zur Verteilung des Material bspw. Spritzdüsen zugeordnet sein können.

Die mehreren Gestängesegmente 14 sind mittels Gelenken 26 miteinander verbunden und jeweils mittels motorischen Stelleinrichtungen 28 (gemäß Figur 1 der Übersichthalber nur zwei dargestellt) in eine ausgeklappte Arbeitsstellung (vergl. Figur 1B) und eine zusammengeklappte Transportstellung (vergl. Figur 1A) zueinander klappbar. Die Stelleinrichtungen 28 können bspw. durch hydraulisch und/oder pneumatisch betriebene Zylinder gebildet sein. Auch elektrisch betriebene Stelleeinrichtungen 28 wären denkbar.

Wie aus den Figuren hervorgeht, bildet wenigstens ein Gestängesegment 14 ein Mittelteil 15, welches zumindest um eine in Fahrtrichtung FR verlaufende Schwenkachse 30 bewegbar (z.B. drehbar) am Trägerfahrzeug 16 mittelbar angeordnet ist. Wobei eine mittelbare Anordnung gemäß den Figuren bedeutet, dass zwischen dem Trägerfahrzeug 16 und dem Mittelteil 15 ein Tragerahmen 32 vorgesehen ist. Wobei es auch denkbar wäre das Verteilgestänge 12, respektive das Mittelteil 15 unmittelbar am Trägerfahrzeug 16 anzubringen und bspw. auf einen zwischengelagerten Tragerahmen 32 zu verzichten.

Die Verteilmaschine 10 umfasst darüber hinaus mehrere Lageerfassungseinrichtungen 110, die eingerichtet sind, anhand von Lagen der Gestängesegmente 14 zueinander, Positionssignale an eine Steuereinrichtung 120 zu liefern. Wobei die Steuereinrichtung 120 zum Bereitstellen von Stellsignalen für die Stelleinrichtungen 28 eingerichtet ist.

Erfindungsgemäß ist vorgesehen, dass die Steuereinrichtung 120 eingerichtet ist, in Abhängigkeit der erfassten Neigung des Trägerfahrzeuges 16 Stellsignale für die Stelleinrichtungen 28 derartig bereitzustellen, dass eine Ausführung von Stellbewegungen der Stelleinrichtungen 28 derartig erfolgt, dass ein zumindest annähernd synchrones und/oder definiert asynchrones Klappen von wenigstens zwei Gestängesegmenten 14 relativ zum Mittelteil 15 ausgeführt wird.

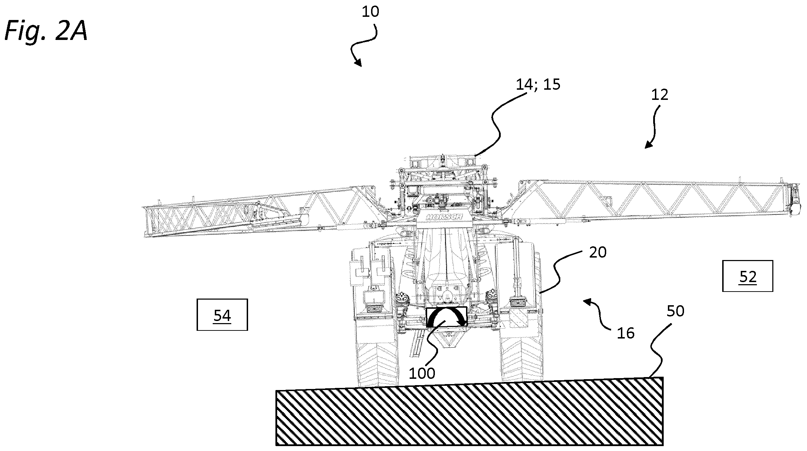

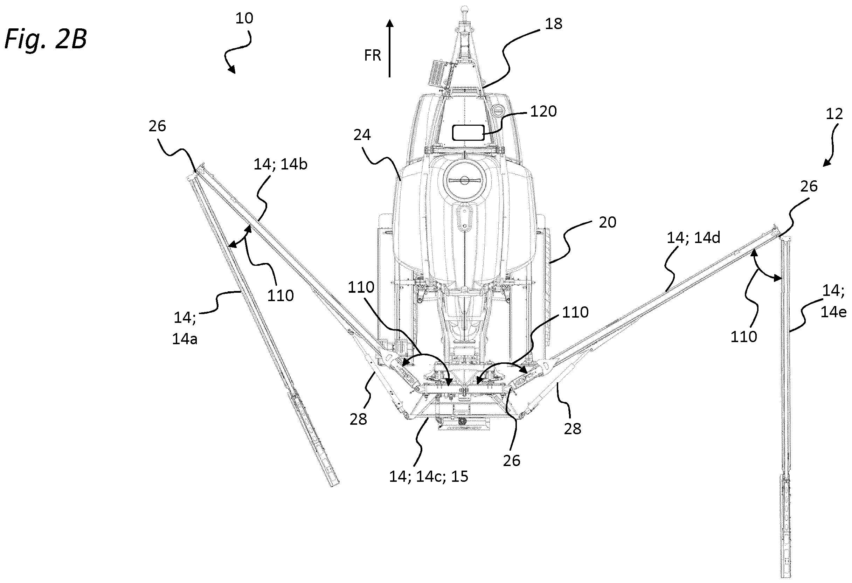

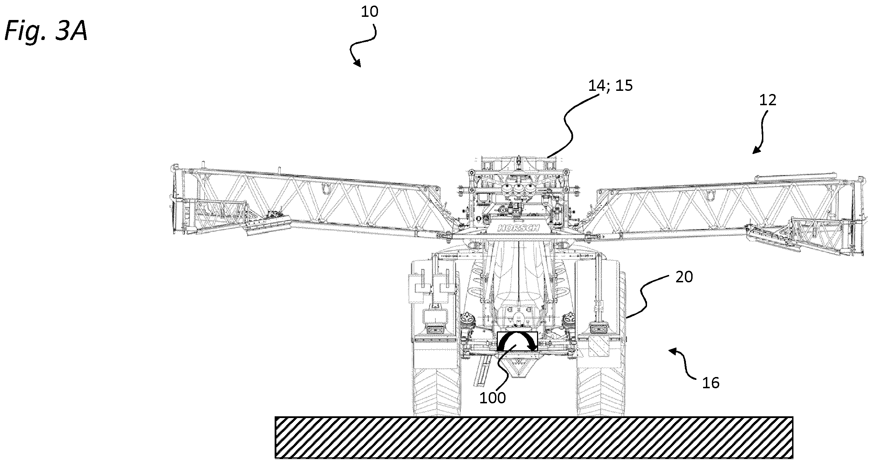

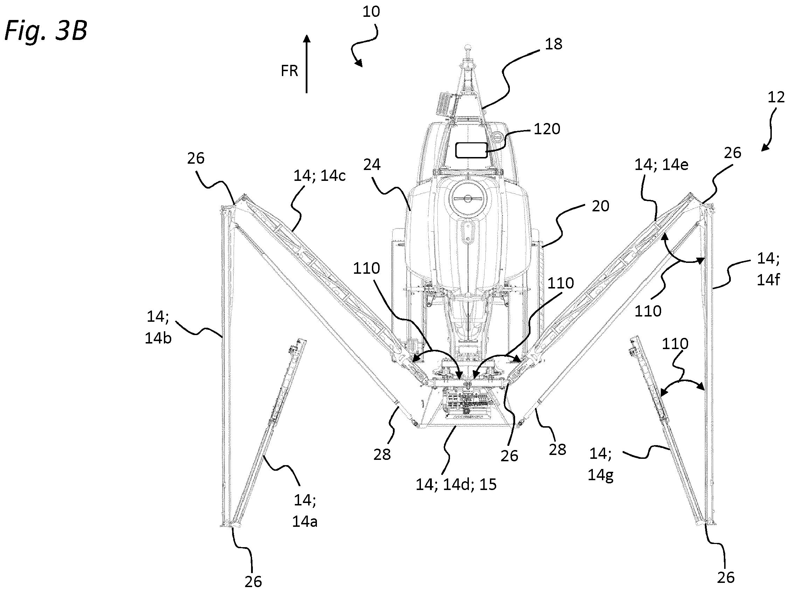

Infolge der erfindungsgemäßen Maßnahmen, wird demnach eine Verteilmaschine 10 geschaffen, mittels derer ein Einklappen oder Ausklappen von Gestängesegmenten 14 eines Verteilgestänge 12 zueinander, respektive gegenüber dem Mittelteil 15 in Abhängigkeit einer Hanglage zumindest annähernd synchron (vergl. Figuren 3) und/oder definiert asynchron (vergl. Figuren 2) erfolgt.

Wie insbesondere aus der Detailansicht der Figur 1C hervorgeht ist es möglich, dass das Mittelteil 15 mittels einer, mittels der Steuereinrichtung 120 steuer- und/oder regelbaren Höhenverstelleinrichtung 130 höhenverstellbar mittelbar am Trägerfahrzeug 16 gelagert ist, wobei die Steuereinrichtung 120 eingerichtet ist, Steuer- und/oder Regelsignale für die Höhenverstelleinrichtung 130 in Abhängigkeit von mittels der Lageerfassungseinrichtung 110 gelieferten Positionssignalen bereitzustellen, wodurch ein möglichst tief liegender Schwerpunkt der Verteilmaschine 10 erreicht wird. Dies bedeutet, dass bspw. das Verteilgestänge 12 erst angehoben wird, wenn eine Kollision des Verteilgestänge 12, respektive von einem Gestängesegment 14 mit bspw. dem Vorratsbehälter 24 eintreten könnte. So kann bspw. bei einem zusammenklappen ein Anheben des Verteilgestänge erst bei einer Klappstellung wie sie bspw. gemäß der Figur 3B vorliegt erfolgen.

Die Höhenverstelleinrichtung 130 kann gemäß der Ausführungsbeispiele durch zumindest einen Linearantrieb (z.B. hydraulisch und/oder pneumatisch betriebener Zylinder) gebildet sein.

Weitere Details der Erfindung gehen aus den Figuren 2A und 2B sowie den Figuren 3A und 3B hervor, welche nachfolgend unter gemeinsamer Bezugnahme beschrieben werden.

Figur 2A zeigt eine Rückansicht einer Ausführungsvariante einer Verteilmaschine 10, in Form einer Feldspritze, wessen Trägerfahrzeug 16 durch eine Fahrt entlang eines Hanges 50 nach links geneigt ist, mit einem Verteilgestänge 12 welches fünf Gestängesegmente 14; 14a-14e umfasst und welches aufgrund der Neigung sich in einer definiert asynchronen Klappstellung befindet. Dementsprechend zeigt die Figur 2B eine Draufsicht der Verteilmaschine 10 gemäß der Figur 2A.

Figur 3A zeigt eine Rückansicht einer Ausführungsvariante einer Verteilmaschine 10, in Form einer Feldspritze, wessen Trägerfahrzeug 16 nicht geneigt ist, mit einem Verteilgestänge 12 welches sieben Gestängesegmente 14; 14a-14g umfasst und welches aufgrund einer geraden Ausrichtung des Trägerfahrzeug 16 sich in einer zumindest annähernd synchronen Klappstellung befindet. Dementsprechend zeigt die Figur 3B eine Draufsicht der Verteilmaschine 10 gemäß der Figur 3A.

Die landwirtschaftliche Verteilmaschine 10 umfasst ein Trägerfahrzeug 16, mit einer Neigungserfassungseinrichtung 100 die zur Erfassung einer Neigung des Trägerfahrzeug 16, vorzugsweise quer zur Fahrtrichtung FR, eingerichtet ist.

Die landwirtschaftliche Verteilmaschine 10 umfasst zudem ein Verteilgestänge 12 zum Ausbringen von Material, wie bspw. Düngemittel, Pflanzenschutzmittel oder Saatgut, mit mehreren Gestängesegmenten 14; 14a-14g, die mittels Gelenken 26 miteinander verbunden sind und jeweils mittels motorischen Stelleinrichtungen 28 in eine ausgeklappte Arbeitsstellung und eine zusammengeklappte Transportstellung zueinander klappbar sind, wobei wenigstens ein Gestängesegment 14; 14a-14g ein Mittelteil 15 bildet. Es sei noch angemerkt das der Übersichthalber jeweils nur eine verringerte Anzahl an Stelleinrichtungen 28 dargestellt ist.

Zudem sind mehrere Lageerfassungseinrichtungen 110 vorgesehen, die eingerichtet sind anhand von Lagen der Gestängesegmente 14; 14a-14g zueinander, Positionssignale an eine Steuereinrichtung 120 zu liefern.

Wie aus den Figuren 2 und 3 hervorgeht, ist erfindungsgemäß vorgesehen, dass die Steuereinrichtung 120 eingerichtet ist, in Abhängigkeit der erfassten Neigung des Trägerfahrzeuges 16 Stellsignale für die Stelleinrichtungen 28 derartig bereitzustellen, dass eine Ausführung von Stellbewegungen der Stelleinrichtungen 28 derartig erfolgt, dass ein zumindest annähernd synchrones (vergl. Figuren 3) und/oder definiert asynchrones (vergl. Figuren 2) Klappen von wenigstens zwei Gestängesegmenten 14; 14a-14g relativ zum Mittelteil 15 ausgeführt wird.

Die Gestängesegmente 14 können mittels Gelenken 26 und jeweils mittels motorischen Stelleinrichtungen 28 mit einem Schwenkwinkel von 180° (z.B. zwei Gestängesegmente 14 zueinander) oder von 90° (z.B. zwei Gestängesegmente 14 relativ zum Mittelteil 15) in eine ausgeklappte Arbeitsstellung und eine zusammengeklappte Transportstellung klappbar sein, wobei die Gelenke 28, gemäß der Ausführungsbeispiele durch in Arbeitsstellung im Wesentlichen aufrecht orientierte, Drehachsen gebildet sind.

Es ist möglich, dass die Steuereinrichtung 120 eingerichtet ist, in Abhängigkeit einer erfassten Neigung des Trägerfahrzeuges 16 eine Zuordnung der Stelleinrichtung 28 und/oder des Gestängesegment 14 durchzuführen, insbesondere derartig durchzuführen, ob eine Stelleinrichtung 28 und/oder ein Gestängesegment 14 sich Hangaufwärts 52 befindet oder sich Hangabwärts 54 befindet, vorzugsweise sich gegenüber dem Mittelteil 15 Hangaufwärts 52 oder Hangabwärts 54 befindet. Infolge der Zuordnung kann demnach insbesondere ein gezielt asynchrones Klappen der Gestängesegmente 14 derartig durchgeführt werden, dass Hangaufwärts 54 ein Klappvorgang bspw. langsamer durchgeführt wird.

Wie aus den Figuren 2 hervorgeht ist vorgesehen, dass bei ausklappen oder zusammenklappen an einem Hang 50 ein definiert asynchrones Klappen von wenigstens zwei Gestängesegmenten 14; 14a-14e relativ zum Mittelteil 15 ausgeführt wird oder gemäß der Figuren 2 von allen Gestängesegmenten 14; 14a-14e relativ zum Mittelteil ausgeführt wird. Wobei hierbei angemerkt sei, dass die jeweils asynchron geklappten Gestängesegmente 14; 14a-14e nicht direkt mit dem Mittelteil 15 gekoppelt sein müssen, sondern auch weiter außenliegend angeordnet sein können.

Wobei es auch denkbar ist, dass bei einem definiert asynchronen Klappen auch zumindest zwei Gestängesegmente 14 zumindest annähernd synchron zueinander geklappt werden, jedoch wiederum andere Gestängesegmente 14 definiert asynchron zueinander geklappt werden.

Ein definiert asynchrones Klappen umfasst zweckmäßig insbesondere ein derartiges Klappen, dass gegenüber dem Mittelteil 15 eine Breite der Hangaufwärts 52 sich befindenden Gestängesegmente 14 stets größer ist als eine Breite der Hangabwärts 54 sich befindenden Gestängesegmente 14.

Wie aus den Figuren 3 hervorgeht, kann vorgesehen sein, dass ein zumindest annähernd synchrones Klappen, vorzugsweise ein zumindest annähernd symmetrisches, insbesondere winkelsymmetrisches, Klappen von wenigstens zwei Gestängesegmenten 14 relativ zum Mittelteil 15 umfasst, wobei die Steuereinrichtung 120 hierfür eingerichtet ist, Stellsignale für die Stelleinrichtungen 28 derartig bereitzustellen, dass eine Ausführung von Stellbewegungen der Stelleinrichtungen 28 derartig erfolgt, dass zumindest zwei Lageerfassungseinrichtungen 110 durch zumindest weitgehend identische Lagen definierte Positionssignale liefern. Es sei hierzu angemerkt, dass sich wie aus der Figur 3 hervorgeht die Positionssignale jeweils auf Relativpositionen beziehen, d.h. somit bspw. gleiche Winkelsignale liefern, welche jedoch, aufgrund der Anordnung (links oder rechts vom Mittelteil 15) negativ oder positiv sein können.

Demgegenüber ist es gemäß der Figuren 2 möglich, dass ein definiert asynchrones Klappen, vorzugsweise ein asymmetrisches Klappen von wenigstens zwei Gestängesegmenten 14 relativ zum Mittelteil 15 umfasst, gemäß der Figur 2 jedoch ein asymmetrischen Klappen von allen Gestängesegmenten 14 relativ zum Mittelteil 15 umfasst, wobei die Steuereinrichtung 120 hierfür eingerichtet ist, Stellsignale für die Stelleinrichtungen 28 derartig bereitzustellen, dass eine Ausführung von Stellbewegungen der Stelleinrichtungen 28 derartig erfolgt, dass zumindest zwei Lageerfassungseinrichtungen 110 durch unterschiedliche Lagen definierte Positionssignale liefern, vorzugsweise durch definierte unterschiedliche Lagen definierte Positionssignale liefern. Was bedeutet, dass bspw. die Lageerfassungseinrichtungen 110 definierte unterschiedliche Winkel liefern müssen und die Stelleinrichtungen 28 entsprechend gesteuert und/oder geregelt werden.

Gemäß der Figuren 3 ist es möglich, dass für das Ausführen eines zumindest annähernd synchronen Klappen, die Steuereinrichtung 120 eingerichtet ist, Stellsignale für die Stelleinrichtungen 120 derartig bereitzustellen, dass eine Ausführung von Stellbewegungen der Stelleinrichtungen 28 mit derartigen Verfahrgeschwindigkeiten erfolgt, dass die Gestängesegmente 14 eine zumindest annähernd gleiche Klappgeschwindigkeit zueinander aufweisen und/oder eine zumindest annähernd gleiche Winkelposition zueinander aufweisen. Dies bedeutet das bspw. bei einer synchronen Klappung gegenüber dem Mittelteil 15 gegenüberliegende Gestängesegmente (z.B. 14a zu 14g und 14b zu 14f und 14c zu 14e) gleiche Winkelpositionen aufweisen.

Gemäß der Figuren 2 ist es möglich, dass für das Ausführen eines definiert asynchronen Klappen, die Steuereinrichtung 120 eingerichtet ist, Stellsignale für die Stelleinrichtungen 28 derartig bereitzustellen, dass eine Ausführung von Stellbewegungen der Stelleinrichtungen 28 mit derartigen unterschiedlichen Verfahrgeschwindigkeiten erfolgt, dass die Gestängesegmente 14 unterschiedliche Klappgeschwindigkeiten zueinander aufweisen und/oder unterschiedliche Winkelpositionen zueinander aufweisen. Dies bedeutet das bspw. bei einer definiert asynchronen Klappung gegenüber dem Mittelteil 15 gegenüberliegende Gestängesegmente (z.B. 14a zu 14e und 14b zu 14d) unterschiedliche Winkelpositionen aufweisen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste:

- 10: Verteilmaschine, Feldspritze
- 12: Verteilgestänge
- 14, 14a-14g: Gestängesegment
- 15: Mittelteil
- 16: Trägerfahrzeug
- 18: Chassis
- 20: Fahrwerk
- 22: Verbindungseinrichtung
- 24: Vorratsbehälter
- 26: Gelenk
- 28: Stelleinrichtung
- 30: Schwenkachse
- 32: Tragerahmen

- 50: Hang
- 52: Hangaufwärts
- 54: Hangabwärts

- 100: Neigungserfassungseinrichtung
- 110: Lageerfassungseinrichtung
- 120: Steuereinrichtung
- 130: Höhenverstelleinrichtung

- FR: Fahrtrichtung

## Patentansprüche

1. Landwirtschaftliche Verteilmaschine (10), vorzugsweise Feldspritze oder pneumatischer Düngerstreuer, zumindest umfassend,
- ein Trägerfahrzeug (16), mit einer Neigungserfassungseinrichtung (100), die zur Erfassung einer Neigung des Trägerfahrzeug (16), vorzugsweise quer zur Fahrtrichtung (FR), eingerichtet ist,
- ein Verteilgestänge (12) zum Ausbringen von Material, wie Düngemittel, Pflanzenschutzmittel oder Saatgut, mit mehreren Gestängesegmenten (14; 14a-14g), die mittels Gelenken (26) miteinander verbunden sind und jeweils mittels motorischen Stelleinrichtungen (28) in eine ausgeklappte Arbeitsstellung und eine zusammengeklappte Transportstellung zueinander klappbar sind, wobei wenigstens ein Gestängesegment (14; 14a-14g) ein Mittelteil (15) bildet, welches zumindest um eine in Fahrtrichtung (FR) verlaufende Schwenkachse (30) bewegbar am Trägerfahrzeug (16) mittelbar oder unmittelbar angeordnet ist,
- eine Steuereinrichtung (120), zum Bereitstellen von Stellsignalen für die Stelleinrichtungen (28),
- eine Lageerfassungseinrichtung (110), die eingerichtet ist, anhand von Lagen der Gestängesegmente (14; 14a-14g), Positionssignale an die Steuereinrichtung (120) zu liefern,
**dadurch gekennzeichnet, dass** die Steuereinrichtung (120) eingerichtet ist, in Abhängigkeit der erfassten Neigung des Trägerfahrzeug (16) Stellsignale für die Stelleinrichtungen (28) derartig bereitzustellen, dass eine Ausführung von Stellbewegungen der Stelleinrichtungen (28) derartig erfolgt, dass ein zumindest annähernd synchrones und/oder definiert asynchrones Klappen von wenigstens zwei Gestängesegmenten (14; 14a-14g) relativ zum Mittelteil (15) ausgeführt wird.

2. Verteilmaschine (10) nach Anspruch 1, **dadurch gekennzeichnet, dass** die Steuereinrichtung (120) eingerichtet ist, in Abhängigkeit einer erfassten Neigung des Trägerfahrzeug (16) eine Zuordnung der Stelleinrichtung (28) und/oder des Gestängesegment (14; 14a-14g) durchzuführen, insbesondere derartig durchzuführen ob eine Stelleinrichtung (28) und/oder ein Gestängesegment (14; 14a-14g) sich Hangaufwärts (52) befindet oder sich Hangabwärts (54) befindet, vorzugsweise sich gegenüber dem Mittelteil (15) Hangaufwärts (52) oder Hangabwärts (54) befindet.

3. Verteilmaschine (10) nach einem der vorherigen Ansprüche, **dadurch gekennzeichnet, dass**
- ein zumindest annähernd synchrones Klappen, vorzugsweise ein zumindest annähernd symmetrisches, insbesondere winkelsymmetrisches, Klappen von wenigstens zwei Gestängesegmenten (14; 14a-14g) relativ zum Mittelteil (15) umfasst,
- wobei die Steuereinrichtung (120) hierfür eingerichtet ist, Stellsignale für die Stelleinrichtungen (28) derartig bereitzustellen, dass eine Ausführung von Stellbewegungen der Stelleinrichtungen (28) derartig erfolgt, dass zumindest zwei Lageerfassungseinrichtungen (110) durch zumindest weitgehend identische Lagen definierte Positionssignale liefern.

4. Verteilmaschine (10) nach einem der vorherigen Ansprüche, **dadurch gekennzeichnet, dass**
- ein definiert asynchrones Klappen, vorzugsweise ein asymmetrisches Klappen von wenigstens zwei Gestängesegmenten (14; 14a-14g) relativ zum Mittelteil (15) umfasst,
- wobei die Steuereinrichtung (120) hierfür eingerichtet ist, Stellsignale für die Stelleinrichtungen (28) derartig bereitzustellen, dass eine Ausführung von Stellbewegungen der Stelleinrichtungen (28) derartig erfolgt, dass zumindest zwei Lageerfassungseinrichtungen (110) durch unterschiedliche Lagen definierte Positionssignale liefern, vorzugsweise durch definierte unterschiedliche Lagen definierte Positionssignale liefern.

5. Verteilmaschine (10) nach einem der vorherigen Ansprüche, **dadurch gekennzeichnet, dass** für das Ausführen eines definiert asynchronen Klappen, die Steuereinrichtung (120) dazu eingerichtet ist, Stellsignale für zumindest eine Hangaufwärts (52) angeordnete Stelleinrichtung (28) derartig bereitzustellen, dass eine Ausführung von Stellbewegungen mittels der Stelleinrichtung (28) derartig erfolgt,
- dass bei einem Ausklappen, zumindest ein sich Hangaufwärts (52) befindendes Gestängesegment (14; 14a-14g) eine größere Klappgeschwindigkeit aufweist als zumindest ein sich Hangabwärts (54) befindendes Gestängesegment (14; 14a-14g) und
- dass bei einem Einklappen, zumindest ein sich Hangaufwärts (52) befindendes Gestängesegment (14; 14a-14g) eine geringere Klappgeschwindigkeit aufweist als zumindest ein sich Hangabwärts (54) befindendes Gestängesegment (14; 14a-14g).

6. Verteilmaschine (10) nach einem der vorherigen Ansprüche, **dadurch gekennzeichnet, dass** für das Ausführen eines zumindest annähernd synchronen Klappen, die Steuereinrichtung (120) eingerichtet ist, Stellsignale für die Stelleinrichtungen (28n derartig bereitzustellen,
- dass eine Ausführung von Stellbewegungen der Stelleinrichtungen (28) mit derartigen Verfahrgeschwindigkeiten erfolgt, dass die Gestängesegmente (14; 14a-14g) eine zumindest annähernd gleiche Klappgeschwindigkeit zueinander aufweisen und/oder
- dass eine Ausführung von Stellbewegungen der Stelleinrichtungen (28) mit derartigen Verfahrgeschwindigkeiten erfolgt, dass die Gestängesegmente (14; 14a-14g) eine zumindest annähernd gleiche Winkelposition zueinander aufweisen, und/oder
- dass eine Ausführung von Stellbewegungen der Stelleinrichtungen (28) zumindest weitgehend gleichzeitig gestartet wird.

7. Verteilmaschine (10) nach einem der vorherigen Ansprüche, **dadurch gekennzeichnet, dass** für das Ausführen eines definiert asynchronen Klappen, die Steuereinrichtung (120) eingerichtet ist, Stellsignale für die Stelleinrichtungen (28) derartig bereitzustellen,
- dass eine Ausführung von Stellbewegungen der Stelleinrichtungen (28) mit derartigen unterschiedlichen Verfahrgeschwindigkeiten erfolgt, dass die Gestängesegmente (14; 14a-14g) unterschiedliche Klappgeschwindigkeiten zueinander aufweisen und/oder
- dass eine Ausführung von Stellbewegungen der Stelleinrichtungen (28) mit derartigen unterschiedlichen Verfahrgeschwindigkeiten erfolgt, dass die Gestängesegmente (14; 14a-14g) unterschiedliche Winkelpositionen zueinander aufweisen und/oder
- dass eine Ausführung von Stellbewegungen der Stelleinrichtungen (28) mit einem definierten Zeitversatz gestartet wird und/oder
- dass eine Ausführung von Stellbewegungen in Teilschritten erfolgt, so dass ein Hangaufwärts (52) befindendes Gestängesegment (14; 14a-14g) erst zusammengeklappt wird, nachdem ein Hangabwärts (54) befindendes Gestängesegment (14; 14a-14g) zusammengeklappt wurde.

8. Verteilmaschine (10) nach einem der Ansprüche 6 oder 7, **dadurch gekennzeichnet, dass** in der Steuereinrichtung (120) durch Neigungen des Trägerfahrzeug (16) definierte, vorzugsweise durch Bereiche von Neigungen des Trägerfahrzeug (16) definierte,
- Sollvorgaben für Verfahrgeschwindigkeiten, Winkelpositionen und/oder einen definierten Zeitversatz für ein zumindest annähernd synchrones und/oder definiert asynchrones Klappen, hinterlegt sind,
- wobei die Steuereinrichtung (120) eingerichtet ist, Stellsignale für die Stelleinrichtungen (28) in Abhängigkeit der Sollvorgaben und von mittels der Lageerfassungseinrichtung (110) gelieferten Positionssignalen bereitzustellen.

9. Verteilmaschine (10) nach einem der vorherigen Ansprüche, **dadurch gekennzeichnet, dass**
- das Verteilgestänge (12), wenigstens fünf Gestängesegmente (14; 14a-14g) oder wenigstens sieben Gestängesegmente (14; 14a-14g) umfasst,
- wobei die Steuereinrichtung (120) eingerichtet ist, in Abhängigkeit der erfassten Neigung des Trägerfahrzeug (16) Stellsignale für die Stelleinrichtungen (28) derartig bereitzustellen, dass eine Ausführung von Stellbewegungen der Stelleinrichtungen (28) für ein definiert asynchrones Klappen derartig erfolgt,
- dass ein zumindest annähernd synchrones Klappen von wenigstens zwei Gestängesegmente (14; 14a-14g) relativ zum Mittelteil (15) ausgeführt wird und ein jeweils definiert asynchrones Klappen von wenigstens zwei Gestängesegmenten (14; 14a-14g) jeweils gegenüber einem weiteren Gestängesegment (14; 14a-14g), ausgeführt wird und/oder
- dass ein definiert asynchrones Klappen von wenigstens zwei Gestängesegmenten (14; 14a-14g) relativ zum Mittelteil (15) ausgeführt wird und ein zumindest annähernd synchrones Klappen von wenigstens zwei Gestängesegmenten (14; 14a-14g) jeweils gegenüber einem weiteren Gestängesegment (14; 14a-14g) ausgeführt wird.

10. Verteilmaschine (10) nach einem der vorherigen Ansprüche, dass die Steuereinrichtung (120) eingerichtet ist, Stellsignale für die Stelleinrichtungen (28) in Abhängigkeit von mittels der Lageerfassungseinrichtung (110) gelieferten Positionssignalen derartig bereitzustellen, dass eine Ausführung von Stellbewegungen der Stelleinrichtungen (28) mit derartigen sich verändernden Verfahrgeschwindigkeiten erfolgt, das eine Verfahrgeschwindigkeit vor Erreichen einer Endlage der Gestängesegmente (14; 14a-14g) in ausgeklappter Arbeitsposition oder in zusammengeklappter Transportposition reduziert wird.

11. Verteilmaschine (10) nach einem der vorherigen Ansprüche, **dadurch gekennzeichnet, dass**
- Grenzwerte für Neigungen des Trägerfahrzeug (16) definiert und/oder definierbar sind und die Steuereinrichtung (120) eingerichtet ist,
- in Abhängigkeit einer erfassten Neigung des Trägerfahrzeug (16) und in Abhängigkeit von Grenzwerten für Neigungen des Trägerfahrzeug (16) Stellsignale für die Stelleinrichtungen (28) derartig bereitzustellen, dass eine Ausführung von Stellbewegungen der Stelleinrichtungen (28) derartig erfolgt,
- dass bei einem unterschreiten des Grenzwertes ein zumindest annähernd synchrones Klappen von wenigstens zwei Gestängesegmenten (14; 14a-14g) relativ zum Mittelteil (15) ausgeführt wird und
- dass bei einem Erreichen oder Überschreiten des Grenzwertes ein definiert asynchrones Klappen von wenigstens zwei Gestängesegmenten (14; 14a-14g) relativ zum Mittelteil (15) ausgeführt wird.

12. Verteilmaschine (10) nach Anspruch 11, **dadurch gekennzeichnet, dass** Grenzwerte für Neigungen des Trägerfahrzeug (16) manuell eingebbar oder einlesbar sind und/oder definiert sind durch
- eine Maschinengeometrie des Trägerfahrzeug (16), insbesondere eine Fahrspur eines dem Trägerfahrzeug (16) zugeordneten Fahrwerk und/oder
- die Maschinengeometrie des Verteilgestänge (12), insbesondere durch eine Breite der Gestängesegmente (14; 14a-14g).

13. Verteilmaschine (10) nach einem der vorherigen Ansprüche, **dadurch gekennzeichnet, dass** das Mittelteil (15) mittels einer, mittels der Steuereinrichtung (120) steuer- und/oder regelbaren Höhenverstelleinrichtung (130) höhenverstellbar am Trägerfahrzeug (16) gelagert ist,
- wobei die Steuereinrichtung (120) eingerichtet ist, Steuer- und/oder Regelsignale für die Höhenverstelleinrichtung (130) in Abhängigkeit von mittels der Lageerfassungseinrichtung (110) gelieferten Positionssignalen bereitzustellen.

14. Verteilmaschine (10) nach einem der vorherigen Ansprüche, **dadurch gekennzeichnet, dass**
- eine Drehlage des Mittelteil (15) um die in Fahrtrichtung (FR) verlaufende Schwenkachse (30) mittels eines oder mehreren Stellantrieben mittelbar oder unmittelbar veränderbar oder sperrbar ist,
- wobei die Steuereinrichtung (120) eingerichtet ist, Stellsignale für die Stelleinrichtungen (28) unter Berücksichtigung einer definierten und/oder definierbaren Drehlage bereitzustellen, vorzugsweise derartig, dass eine Ausführung von Stellbewegungen ausschließlich erfolgt, bei einem zumindest weitgehend parallel zu einer Bezugsfläche orientierten Drehlage des Verteilgestänge (12) und/oder bei einer senkrecht zum Trägerfahrzeug (16) orientierten Drehlage des Verteilgestänge (12).

15. Verteilmaschine (10) nach einem der vorherigen Ansprüche, **dadurch gekennzeichnet, dass** ein definiert asynchrones Klappen derartig erfolgt, dass gegenüber dem Mittelteil (15) eine Breite der Hangaufwärts (52) sich befindenden Gestängesegmente (14; 14a-14g) stets größer ist als eine Breite der Hangabwärts (54) sich befindenden Gestängesegmente (14; 14a-14g).

16. Verfahren zur Steuerung und/oder Regelung einer landwirtschaftlichen Verteilmaschine (10) vorzugsweise Feldspritze oder pneumatischer Düngerstreuer, zumindest umfassend
- ein Trägerfahrzeug (16), mit einer Neigungserfassungseinrichtung (100), die zur Erfassung einer Neigung des Trägerfahrzeug (16), vorzugsweise quer zur Fahrtrichtung (FR), eingerichtet ist,
- ein Verteilgestänge (12) zum Ausbringen von Material, wie Düngemittel, Pflanzenschutzmittel oder Saatgut, mit mehreren Gestängesegmenten (14; 14a-14g), die mittels Gelenken (26) miteinander verbunden sind und jeweils mittels motorischen Stelleinrichtungen (28) in eine ausgeklappte Arbeitsstellung und eine zusammengeklappte Transportstellung zueinander klappbar sind, wobei wenigstens ein Gestängesegment (14; 14a-14g) ein Mittelteil (15) bildet, welches zumindest um eine in Fahrtrichtung (FR) verlaufende Schwenkachse (30) bewegbar am Trägerfahrzeug (16) mittelbar oder unmittelbar angeordnet ist,
- eine Steuereinrichtung (120), zum Bereitstellen von Stellsignalen für die Stelleinrichtungen (28),
- eine Lageerfassungseinrichtung (110), die eingerichtet ist, anhand von Lagen der Gestängesegmente (14; 14a-14g), Positionssignale an die Steuereinrichtung (120) zu liefern,
**gekennzeichnet durch**, ein Bereitstellen von Stellsignalen für die Stelleinrichtungen (28) in Abhängigkeit einer erfassten Neigung des Trägerfahrzeuges (16) derartig, dass eine Ausführung von Stellbewegungen mittels der Stelleinrichtungen (28) derartig erfolgt, dass ein zumindest annähernd synchrones und/oder definiert asynchrones Klappen von wenigstens zwei Gestängesegmenten (14; 14a-14g) relativ zum Mittelteil (15) ausgeführt wird.

## Claims

1. Agricultural distributing machine (10), preferably a field sprayer or pneumatic fertiliser spreader, at least comprising,
- a carrier vehicle (16), with an inclination detection device (100), which is configured to detect an inclination of the carrier vehicle (16), preferably transverse to the direction of travel (FR),
- a spreader boom (12) for spreading material, such as fertiliser, crop protection agent or seed, with several boom segments (14; 14a-14g), which are connected to one another by means of joints (26) and can each be folded relative to one another by means of motorised adjusting devices (28) into an unfolded working position and a folded transport position, wherein at least one boom segment (14; 14a-14g) forms a central part (15) which is arranged, directly or indirectly, on the carrier vehicle (16) so as to be movable at least about a pivot axis (30) extending in the direction of travel (FR),
- a control device (120) for providing actuating signals for the actuating devices (28),
- a position detection device (110), which is configured to provide position signals to the control device (120) on the basis of positions of the linkage segments (14; 14a-14g),
**characterised in that** the control device (120) is configured to provide actuating signals for the actuating devices (28) as a function of the detected inclination of the carrier vehicle (16) in such a way that actuating movements of the actuating devices (28) are carried out in such a way that an at least approximately synchronous and/or defined asynchronous folding of at least two linkage segments (14; 14a-14g) relative to the central part (15) is carried out.

2. Distributing machine (10) according to claim 1, **characterised in that** the control device (120) is configured to carry out, as a function of a detected inclination of the carrier vehicle (16); 14a-14g), an allocation of the actuating device (28) and/or the boom segment (14; 14a-14g), in particular in such a way as to carry out whether an actuating device (28) and/or a linkage segment (14; 14a-14g) is located uphill (52) or downhill (54), preferably is located uphill (52) or downhill (54) with respect to the central part (15) .

3. Distribution machine (10) according to one of the previous claims, **characterised in that**
- a at least approximately synchronous folding, comprises preferably an at least approximately symmetrical, in particular angularly symmetrical, folding of at least two linkage segments (14; 14a-14g) relative to the central part (15),
- wherein the control device (120) is configured for this purpose to provide actuating signals for the actuating devices (28) in such a way that actuating movements of the actuating devices (28) are executed in such a way that at least two position detection devices (110) provide position signals defined by at least largely identical positions.

4. Distribution machine (10) according to one of the previous claims, **characterised in that**
- a defined asynchronous folding, comprises preferably an asymmetrical folding, of at least two linkage segments (14; 14a-14g) relative to the central part (15),
- wherein the control device (120) being configured for this purpose to provide actuating signals for the actuating devices (28) in such a way that actuating movements of the actuating devices (28) are carried out in such a way that at least two position detection devices (110) provide position signals defined by different positions, preferably provide position signals defined by defined different positions.

5. Distributing machine (10) according to one of the previous claims, **characterised in that** for carrying out a defined asynchronous folding, the control device (120) is configured to provide actuating signals for at least one actuating device (28) arranged uphill (52) in such a way that actuating movements are carried out by means of the actuating device (28) in such a way,
- that, during unfolding, at least one boom segment (14; 14a-14g) located uphill (52) has a greater folding speed than at least one boom segment (14; 14a-14g) located downhill (54), and
- that, during folding, at least one boom segment (14; 14a-14g) located uphill (52) has a lower folding speed than at least one boom segment (14; 14a-14g) located downhill (54).

6. Distributing machine (10) according to one of the previous claims, **characterised in that** for carrying out an at least approximately synchronous folding, the control device (120) is configured to provide actuating signals for the actuating devices (28n) in such a manner,
- that actuating movements of the actuating devices (28) are carried out at such travel speeds that the linkage segments (14; 14a-14g) have at least approximately the same folding speed relative to one another and/or
- that actuating movements of the actuating devices (28) are carried out at such travel speeds that the linkage segments (14; 14a-14g) have at least approximately the same angular position relative to one another, and/or
- that an execution of actuating movements of the actuating devices (28) is started at least largely simultaneously.

7. Distributing machine (10) according to one of the previous claims, **characterized in that** for executing a defined asynchronous folding, the control device (120) is configured to provide actuating signals for the actuating devices (28) in such a way,
- that actuating movements of the actuating devices (28) are carried out at such different travel speeds that the linkage segments (14; 14a-14g) have different folding speeds in relation to one another and/or
- that actuating movements of the actuating devices (28) are carried out at such different travel speeds that the linkage segments (14; 14a-14g) have different angular positions in relation to one another and/or
- that an execution of actuating movements of the actuating devices (28) is started with a defined time offset and/or
- that an execution of actuating movements takes place in partial steps, so that a boom segment (14; 14a-14g) located uphill (52) is only folded together after a boom segment (14; 14a-14g) located downhill (54) has been folded together.

8. Distributing machine (10) according to one of claims 6 or 7, **characterised in that** target values for travel speeds, angular positions and/or a defined time offset for at least approximately synchronous and/or defined asynchronous folding, are stored in the control device (120) wherein the target values are defined by inclinations of the carrier vehicle (16), preferably by ranges of inclinations of the carrier vehicle (16), wherein the control device (120) being configured to provide actuating signals for the actuating devices (28) as a function of the target values and of position signals provided by the position detection device (110).

9. Distributing machine (10) according to one of the previous claims, **characterised in that**
- the spreader boom (12) comprises at least five linkage segments (14; 14a-14g) or at least seven linkage segments (14; 14a-14g),
- wherein the control device (120) is configured to provide actuating signals for the actuating devices (28) as a function of the detected inclination of the carrier vehicle (16) in such a way that actuating movements of the actuating devices (28) for a defined asynchronous folding are executed in such a way,
- that an at least approximately synchronous folding of at least two linkage segments (14; 14a-14g) relative to the central part (15) is carried out and a respectively defined asynchronous folding of at least two linkage segments (14; 14a-14g) is carried out in each case with respect to a further linkage segment (14; 14a-14g), and/or
- that a defined asynchronous folding of at least two linkage segments (14; 14a-14g) relative to the central part (15) is carried out and an at least approximately synchronous folding of at least two linkage segments (14; 14a-14g) is carried out in each case with respect to a further linkage segment (14; 14a-14g).

10. Distributing machine (10) according to one of the previous claims, wherein the control device (120) being configured to provide actuating signals for the actuating devices (28) as a function of position signals provided by the position detection device (110) in such a way that actuating movements of the actuating devices (28) are carried out at such changing travel speeds that a travel speed is reduced before an end position of the linkage segments (14; 14a-14g) is reached in the folded-out working position or in the folded-together transport position.

11. Distributing machine (10) according to one of the previous claims, **characterised in that**
- limit values for inclinations of the carrier vehicle (16) are defined and/or are definable and the control device (120) being configured to,
- provide actuating signals for the actuating devices (28) as a function of a detected inclination of the carrier vehicle (16) and as a function of limit values for inclinations of the carrier vehicle (16) in such a way that actuating movements of the actuating devices (28) are executed in such a way,
- that, if the value falls below the limit value, an at least approximately synchronous folding of at least two linkage segments (14; 14a-14g) relative to the central part (15) is carried out, and
- that when the limit value is reached or exceeded, a defined asynchronous folding of at least two linkage segments (14; 14a-14g) relative to the central part (15) is carried out.

12. Distributing machine (10) according to claim 11, **characterised in that** limit values for inclinations of the carrier vehicle (16) can be entered or read in manually and/or are defined by
- a machine geometry of the carrier vehicle (16), in particular a track of a running gear associated with the carrier vehicle (16) and/or
- the machine geometry of the spreader boom (12), in particular by a width of the linkage segments (14; 14a-14g).

13. Distributing machine (10) according to one of the previous claims, **characterised in that** the central part (15) is mounted on the carrier vehicle (16) in a height-adjustable manner by means of a height adjustment device (130) which can be controlled and/or regulated by means of the control device (120),
- the control device (120) being set up to provide control and/or regulating signals for the height adjustment device (130) as a function of position signals supplied by means of the position detection device (110).

14. Distribution machine (10) according to one of the previous claims, **characterised in that**
- a rotational position of the central part (15) about the swivel axis (30) running in the direction of travel (FR) can be changed or locked directly or indirectly by means of one or more actuators,
- wherein the control device (120) being configured to provide actuating signals for the actuating devices (28) taking into account a defined and/or definable rotational position, preferably in such a way that actuating movements are executed exclusively in the case of a rotational position of the spreader boom (12) oriented at least largely parallel to a reference surface and/or in the case of a rotational position of the spreader boom (12) oriented perpendicularly to the carrier vehicle (16).

15. Distributing machine (10) according to one of the previous claims, **characterized in that**, relative to the central part (15), a defined asynchronous folding takes place in such a way that a width of the boom segments (14; 14a-14g) located uphill (52) is always greater than a width of the boom segments (14; 14a-14g) located downhill (54).

16. Method for controlling and/or regulating an agricultural distributiong machine (10), preferably a field sprayer or pneumatic fertiliser spreader, at least comprising
- a carrier vehicle (16), with an inclination detection device (100), which is configured to detect an inclination of the carrier vehicle (16), preferably transverse to the direction of travel (FR),
- spreader boom (12) for spreading material, such as fertiliser, plant protection agent or seed, with several boom segments (14; 14a-14g), which are connected to one another by means of joints (26) and can each be folded relative to one another by means of motorised adjusting devices (28) into an unfolded working position and a folded transport position, wherein at least one boom segment (14; 14a-14g) forms a central part (15) which is arranged, directly or indirectly, on the carrier vehicle (16) so as to be movable at least about a pivot axis (30) extending in the direction of travel (FR),
- a control device (120) for providing actuating signals for the actuating devices (28),
- a position detection device (110) which is configured to provide position signals to the control device (120) on the basis of positions of the linkage segments (14; 14a-14g),
**characterised by** providing actuating signals for the actuating devices (28) as a function of a detected inclination of the carrier vehicle (16) in such a way that actuating movements are carried out by means of the actuating devices (28) in such a way that an at least approximately synchronous and/or defined asynchronous folding of at least two boom segments (14; 14a-14g) relative to the central part (15) is carried out.

## Revendications

1. Distributeur agricole (10), de préférence pulvérisateur ou épandeur d'engrais pneumatique, comprenant au moins :
- un véhicule de support (16) avec un système de détection d'inclinaison (100), qui est mis au point pour détecter une inclinaison du véhicule de support (16), de préférence de manière transversale par rapport à la direction de déplacement (FR),
- un système de tiges de distribution (12) pour appliquer du matériau, comme des engrais, des produits phytosanitaires ou des semences, avec plusieurs segments de système de tiges (14 ; 14a - 14g), qui sont reliés entre eux au moyen d'articulations (26) et peuvent être rabattus les uns par rapport aux autres dans une position de travail déployée et dans une position de transport repliée respectivement au moyen de systèmes de réglage motorisés (28), dans lequel au moins un segment de système de tiges (14 ; 14a - 14g) forme une partie centrale (15), laquelle est disposée indirectement ou directement sur le véhicule de support (16) de manière à pouvoir être déplacée au moins autour d'un axe de pivotement (30) s'étendant dans la direction de déplacement (FR),
- un système de commande (120) pour fournir des signaux de réglage pour les systèmes de réglage (28),
- un système de détection de position (110), qui est mis au point pour délivrer au système de commande (120) des signaux de position à l'aide de positions des segments de système de tiges (14 ; 14a - 14g),
**caractérisé en ce que** le système de commande (120) est mis au point pour fournir, en fonction de l'inclinaison détectée du véhicule de support (16), des signaux de réglage pour les systèmes de réglage (28) de telle manière qu'une exécution de déplacements de réglage des systèmes de réglage (28) est effectuée de telle manière qu'un rabattement au moins approximativement synchrone et/ou asynchrone de manière définie des au moins deux segments de système de tiges (14 ; 14a - 14g) est exécuté par rapport à la partie centrale (15).

2. Distributeur (10) selon la revendication 1, **caractérisé en ce que** le système de commande (120) est mis au point pour mettre en oeuvre, en fonction d'une inclinaison détectée du véhicule de support (16), une affectation du système de commande (28) et/ou du segment de système de tiges (14 ; 14a - 14g), en particulier si un système de réglage (28) et/ou un segment de système de tiges (14 ; 14a - 14g) se trouvent en amont (52) ou se trouvent en aval (54), de préférence se trouvent en amont (52) ou en aval (54) par rapport à la partie centrale (15).

3. Distributeur (10) selon l'une quelconque des revendications précédentes, **caractérisé en ce que**
- un rabattement au moins approximativement synchrone comprend de préférence un rabattement au moins approximativement symétrique, en particulier selon une symétrie angulaire, d'au moins deux segments de système de tiges (14 ; 14a - 14g) par rapport à la partie centrale (15),
- dans lequel le système de commande (120) est mis au point pour fournir des signaux de réglage pour les systèmes de réglage (28) de telle manière qu'une exécution de déplacements de réglage des systèmes de réglage (28) est effectuée de telle manière qu'au moins deux systèmes de détection de position (110) délivrent des signaux de position définis par des positions au moins largement identiques.

4. Distributeur (10) selon l'une quelconque des revendications précédentes, **caractérisé en ce que**
- un rabattement asynchrone de manière définie comprend de préférence un rabattement asymétrique d'au moins deux segments de système de tiges (14 ; 14a - 14g) par rapport à la partie centrale (15),
- dans lequel le système de commande (120) est mis au point pour fournir des signaux de réglage pour les systèmes de réglage (28) de telle manière qu'une exécution de déplacements de réglage des systèmes de réglage (28) est effectuée de telle manière qu'au moins deux systèmes de détection de position (110) délivrent des signaux de position définis par différentes positions, de préférence délivrent des signaux de position définis par des positions différentes définies.

5. Distributeur (10) selon l'une quelconque des revendications précédentes, **caractérisé en ce que** pour l'exécution d'un rabattement asynchrone de manière définie, le système de commande (120) est mis au point pour fournir des signaux de réglage pour au moins un système de réglage (28) disposé en amont (52) de telle manière qu'une exécution de déplacements de réglage est effectuée au moyen du système de réglage (28) de telle manière
- que lors d'un déploiement, au moins un segment de système de tiges (14 ; 14a - 14g) se trouvant en amont (52) présente une vitesse de rabattement plus importante qu'au moins un segment de système de tiges (14 ; 14a - 14g) se trouvant en aval (54) ; et
- que lors d'un repliage, au moins un segment de système de tiges (14 ; 14a - 14g) se trouvant en amont (52) présente une vitesse de rabattement inférieure à au moins un segment de système de tiges (14 ; 14a - 14g) se trouvant en aval (54).

6. Distributeur (10) selon l'une quelconque des revendications précédentes, **caractérisé en ce que** pour l'exécution d'un rabattement au moins approximativement synchrone, le système de commande (120) est mis au point pour fournir des signaux de réglage pour les systèmes de réglage (28) de telle manière
- qu'une exécution de déplacements de réglage des systèmes de réglage (28) est effectuée avec des vitesses de déplacement telles que les segments de système de tiges (14 ; 14a - 14g) présentent une vitesse de rabattement au moins approximativement identique les uns par rapport aux autres et/ou
- qu'une exécution de déplacements de réglage des systèmes de réglage (28) est effectuée avec des vitesses de déplacement telles que les segments de système de tiges (14 ; 14a - 14g) présentent une position angulaire au moins approximativement identique les uns par rapport aux autres, et/ou
- qu'une exécution de déplacements de réglage des systèmes de réglage (28) est démarrée au moins largement simultanément.

7. Distributeur (10) selon l'une quelconque des revendications précédentes, **caractérisé en ce que** pour l'exécution d'un rabattement asynchrone de manière définie, le système de commande (120) est mis au point pour fournir des signaux de réglage pour les systèmes de réglage (28) de telle manière
- qu'une exécution de déplacements de réglage des systèmes de réglage (28) est effectuée avec des vitesses de déplacement différentes telles que les segments de système de tiges (14 ; 14a - 14g) présentent des vitesses de rabattement différentes les uns par rapport aux autres et/ou
- qu'une exécution de déplacements de réglage des systèmes de réglage (28) est effectuée avec des vitesses de déplacement différentes telles que les segments de système de tiges (14 ; 14a - 14g) présentent des positions angulaires différentes les uns par rapport aux autres, et/ou
- qu'une exécution de déplacements de réglage des systèmes de réglage (28) est démarrée avec un décalage temporel défini, et/ou
- qu'une exécution de déplacements de réglage est effectuée lors d'étapes partielles, si bien qu'un segment de système de tiges (14 ; 14a - 14g) se trouvant en amont (52) est d'abord replié après qu'un segment de système de tiges (14 ; 14a - 14g) se trouvant en aval (54) a été replié.

8. Distributeur (10) selon l'une quelconque des revendications 6 ou 7, **caractérisé en ce que** sont enregistrées dans le système de commande (120)
- des spécifications de consigne définies par des inclinaisons du véhicule de support (16), de préférence définies par des plages d'inclinaisons du véhicule de support (16) pour des vitesses de déplacement, des positions angulaires et/ou un décalage temporel défini pour un rabattement au moins approximativement synchrone et/ou asynchrone de manière définie,
- dans lequel le système de commande (120) est mis au point pour fournir des signaux de réglage pour les systèmes de réglage (28) en fonction des spécifications de consigne et de signaux de position délivrés au moyen du système de détection de position (110).

9. Distributeur (10) selon l'une quelconque des revendications précédentes, **caractérisé en ce que**
- le système de tiges de distribution (12) comprend au moins cinq segments de système de tiges (14 ; 14a - 14g) ou au moins sept segments de système de tiges (14 ; 14a - 14g),
- dans lequel le système de commande (120) est mis au point pour fournir en fonction de l'inclinaison détectée du véhicule de support (16) des signaux de réglage pour les systèmes de réglage (28) de telle manière qu'une exécution de déplacements de réglage des systèmes de réglage (28) est effectuée pour un rabattement asynchrone de manière définie de telle manière
- qu'un rabattement au moins approximativement synchrone d'au moins deux segments de système de tiges (14 ; 14a - 14g) est effectué par rapport à la partie centrale (15) et un rabattement respectivement asynchrone de manière définie d'au moins deux segments de système de tiges (14 ; 14a - 14g) est exécuté respectivement par rapport à un autre segment de système de tiges (14 ; 14a - 14g), et/ou
- qu'un rabattement asynchrone de manière définie d'au moins deux segments de système de tiges (14 ; 14a - 14g) est exécuté par rapport à la partie centrale (15) et un rabattement au moins approximativement synchrone d'au moins deux segments de système de tiges (14 ; 14a - 14g) est exécuté respectivement par rapport à un autre segment de système de tiges (14 ; 14a - 14g).

10. Distributeur (10) selon l'une quelconque des revendications précédentes, **caractérisé en ce que** le système de commande (120) est mis au point pour fournir des signaux de réglage pour les systèmes de réglage (28) en fonction de signaux de position délivrés au moyen du système de détection de position (110) de telle manière qu'une exécution de déplacements de réglage des systèmes de réglage (28) est effectuée avec des vitesses de déplacement variant telles qu'une vitesse de déplacement est réduite avant d'atteindre une position finale des segments de système de tiges (14 ; 14a - 14g) dans une position de travail déployée ou dans une position de transport repliée.

11. Distributeur (10) selon l'une quelconque des revendications précédentes, **caractérisé en ce que**
- des valeurs limites pour des inclinaisons du véhicule de support (16) sont définies et/ou peuvent être définies et le système de commande (120) est mis au point
- pour fournir, en fonction d'une inclinaison détectée du véhicule de support (16) et en fonction de valeurs limites pour des inclinaisons du véhicule de support (16), des signaux de réglage pour les systèmes de réglage (28) de telle manière qu'une exécution de déplacements de réglage des systèmes de réglage (28) est effectuée de telle manière
- que dans le cas d'un non-dépassement de la valeur limite, un rabattement au moins approximativement synchrone d'au moins deux segments de système de tiges (14 ; 14a - 14g) par rapport à la partie centrale (15) est exécuté et
- que en cas d'atteinte ou de dépassement de la valeur limite, un rabattement asynchrone de manière définie d'au moins deux segments de système de tiges (14 ; 14a - 14g) par rapport à la partie centrale (15) est exécuté.

12. Distributeur (10) selon la revendication 11, **caractérisé en ce que** des valeurs limites pour des inclinaisons du véhicule de support (16) peuvent être entrées ou lues et/ou sont définies manuellement par
- une géométrie de machine du véhicule de support (16), en particulier une voie de circulation d'un train de roulement associé au véhicule de support (16), et/ou
- la géométrie de machine du système de tiges de distribution (12), en particulier par une largeur des segments de système de tiges (14 ; 14a - 14g).

13. Distributeur (10) selon l'une quelconque des revendications précédentes, **caractérisé en ce que** la partie centrale (15) est montée de manière ajustable en hauteur sur le véhicule de support (16) au moyen d'un système d'ajustement en hauteur (130) pouvant être commandé et/ou régulé au moyen du système de commande (120),
- dans lequel le système de commande (120) est mis au point pour fournir des signaux de commande et/ou de régulation pour le système d'ajustement en hauteur (130) en fonction de signaux de position délivrés au moyen du système de détection de position (110).

14. Distributeur (10) selon l'une quelconque des revendications précédentes, **caractérisé en ce que**
- une position de rotation de la partie centrale (15) autour de l'axe de pivotement (30) s'étendant dans la direction de déplacement (FR) peut être modifiée ou bloquée indirectement au moyen d'un ou de plusieurs entraînements de réglage ou directement,
- dans lequel le système de commande (120) est mis au point pour fournir des signaux de réglage pour les systèmes de réglage (28) en prenant en compte une position de rotation définie et/ou pouvant être définie, de préférence de telle manière qu'une exécution de déplacements de réglage est effectuée exclusivement, pour une position de rotation, orientée au moins largement de manière parallèle par rapport à une surface de référence, du système de tiges de distribution (12) et/ou pour une position de rotation, orientée de manière perpendiculaire par rapport au véhicule de support (16), du système de tiges de distribution (12).

15. Distributeur (10) selon l'une quelconque des revendications précédentes, **caractérisé en ce qu'**un rabattement asynchrone de manière définie est effectué de telle manière qu'une largeur des segments de système de tiges (14 ; 14a - 14g) se trouvant en amont (52) reste plus grande qu'une largeur des segments de système de tiges (14 ; 14a - 14g) se trouvant en aval (54) par rapport à la partie centrale (15).

16. Procédé pour commander et/ou réguler un distributeur (10) agricole, de préférence un pulvérisateur ou un épandeur d'engrais pneumatique, comprenant au moins
- un véhicule de support (16) avec un système de détection d'inclinaison (100), qui est mis au point pour détecter une inclinaison du véhicule de support (16) de préférence de manière transversale par rapport à la direction de déplacement (FR),
- un système de tiges de distribution (12) pour appliquer du matériau, comme des engrais, des produits phytosanitaires ou des semences, avec plusieurs segments de système de tiges (14 ; 14a - 14g), qui sont reliés les uns aux autres au moyen d'articulations (26) et peuvent être rabattus les uns par rapport aux autres dans une position de travail déployée et dans une position de transport repliée respectivement au moyen de systèmes de réglage motorisés (28), dans lequel au moins un segment de système de tiges (14 ; 14a - 14g) forme une partie centrale (15), laquelle est disposée indirectement ou directement sur le véhicule de support (16) de manière à pouvoir être déplacée au moins autour d'un axe de pivotement (30) s'étendant dans la direction de déplacement (FR),
- un système de commande (120) pour fournir des signaux de réglage pour les systèmes de réglage (28),
- un système de détection de position (110) qui est mis au point pour délivrer au système de commande (120) des signaux de position à l'aide de positions des segments de système de tiges (14 ; 14a - 14g),
**caractérisé par** une fourniture de signaux de réglage pour les systèmes de réglage (28) en fonction d'une inclinaison détectée du véhicule de support (16) de telle manière qu'une exécution de déplacements de réglage est effectuée de telle manière au moyen des systèmes de réglage (28) qu'un rabattement au moins approximativement synchrone et/ou asynchrone de manière définie d'au moins deux segments de système de tiges (14 ; 14a - 14g) par rapport à la partie centrale (15) est exécuté.
